# EUROPÄISCHE PATENTSCHRIFT

(11) **EP 0 420 261 B1**
(45) Veröffentlichungstag und Bekanntmachung des Hinweises auf die Patenterteilung: **24.03.1999**
(21) Anmeldenummer: 90118621.3
(22) Anmeldetag: 27.09.1990
(51) Int. Cl.: G06K 19/08, G06K 19/00, B42D 15/00, B44F 1/00

(54) **Datenträger mit einem optisch variablen Element und Verfahren zu seiner Herstellung**
Record carrier with an optical variable element and method of producing it
Support d'information avec élément optique variable et son procédé de fabrication

(30) Priorität: 28.09.1989 DE 3932505
(43) Veröffentlichungstag der Anmeldung: 03.04.1991
(60) Teilanmeldung: 98117763.7
(73) Patentinhaber: GAO Gesellschaft für Automation und Organisation mbH, 81307 München (DE)
(72) Erfinder: Heckenkamp, Christoph, 81373 München (DE); Stenzel, Gerhard, 80686 München (DE); Kaule, Wittich, 83550 Emmering (DE)
(74) Vertreter: Klunker . Schmitt-Nilson . Hirsch

(56) Entgegenhaltungen:
- EP-A- 47 326
- EP-A- 216 947
- EP-A- 219 012
- EP-A- 253 089
- EP-A- 286 738
- EP-A- 304 194
- DE-A- 2 555 214

## Beschreibung

Die Erfindung betrifft ein Verfahren aus Herstellung einer Serie von Datenträgern, insbesondere Ausweiskarten, Wertpapieren oder dergleichen, wobei jeder der Datenträger mit einem mehrschichtigen, optisch variablen Element, insbesondere Hologramm, versehen ist, welches Beugungsstrukturen aufweist, wobei die Beugungsstrukturen eine visuell erkennbare Information darstellen. Die Erfindung betrifft außerdem ein Verfahren zur Herstellung von Transferbändern und einer Serie von optisch variablen Elementen.

Optisch variable Elemente sind seit einigen Jahrzehnten in verschiedenen Ausführungsformen bekannt. Gemeinsam ist diesen Elementen, daß sie je nach Betrachtungs- und Beleuchtungswinkel unterschiedliche optische Effekte zeigen. Eine besondere Klasse von optisch variablen Elementen beruht auf Beugungseffekten. Hierzu zählen lineare oder strukturierte Beugungsgitter, holografische Aufzeichnungen, Kinegramme und dergleichen.

Optisch variable Elemente finden in den unterschiedlichsten Gebieten Verwendung, z. B. in der Werbebranche, im Dekorationsbereich, aber auch zur Echtheitskennzeichnung von Datenträgern. Durch die gerade in letzter Zeit ganz erheblich gestiegene optische Qualität finden Hologramme, Kinegramme, Beugungsgitter etc. im Sicherheitsbereich, beispielsweise für Kreditkarten, Ausweiskarten, Banknoten, Sicherheitsdokumente usw., immer mehr Zuspruch. Die steigende Beliebtheit hat im wesentlichen zwei Gründe. Erstens erfüllen derartige Elemente die traditionell üblichen Sicherheitsanforderungen für human prüfbare Echtheitsmerkmale, das ist ein hoher Aufwand zur Herstellung und Nachahmung, geringe Verfügbarkeit der Technologie sowie eine eindeutige überprüfbarkeit ohne zusätzliche Hilfsmittel. Zum zweiten entsprechen die Elemente dem neuesten Stand der Technik, wodurch sie dem zugeordneten Produkt einen modernen, hochtechnischen Charakter verleihen.

In der Patentliteratur und in der praktischen Anwendung im Sicherheitsbereich wurden derartige Elemente bisher in verschiedenen Versionen bekannt.

Bereits sehr früh nach dem Erscheinen der ersten Hologramme wurde vorgeschlagen, Ausweiskarten, Kreditkarten und dergleichen vor Nachahmung und Verfälschung dadurch zu schützen, daß die personenbezogenen Daten des Kartenbenutzers neben der üblichen fotografischen und/oder schriftlichen Form noch einmal holografisch in dem Hologramm auf der Karte gespeichert werden. Ein Vergleich zwischen den herkömmlichen Kartendaten und den im Hologramm gespeicherten Daten sollte ihre Richtigkeit nachweisen. Aus der Vielzahl der Veröffentlichungen hierzu seien die DE-OS 25 01 604, die DE-OS 25 12 550 und die DE-OS 25 45 799 stellvertretend genannt.

Obwohl im Rahmen der traditionellen Sicherheitsphilosophie der Aufwand für die Herstellung von Echtheitsmerkmalen wunschgemäß hoch sein soll, gilt dies jedoch in erster Linie für den Anschaffungswert und die geringe Verfügbarkeit der notwendigen Produktionseinrichtungen. Die Herstellung der in großen Mengen zu produzierenden Echtheitsmerkmale selbst sollte auf diesen relativ teuren Produktionsanlagen allerdings in wirtschaftlicher Form möglich sein.

Bei verschiedenen Hologrammarten ist die Erstellung des jeweils ersten Hologramms relativ aufwendig und kostspielig. Die Herstellung von Duplikaten ist dagegen zu einem Bruchteil dieser "Erstkosten" möglich.

Als nachteilig erweist es sich demnach bei den o.g. Ausführungsformen, daß die Herstellung der Hologramme nicht nur auf sehr kostspieligen technischen Anlagen zu erfolgen hat, sondern auch für jede Karte eigene Hologramme mit individuellen Informationen (Personalisierungsdaten) zu fertigen sind, so daß der technische Aufwand zur Erstellung dieser Einzelhologramme (Unikate) stets relativ hoch ist. Eine Reduzierung der Kosten durch Verlagerung des Aufwandes in die Produktionsvorrichtungen ist nur in sehr geringem Maß möglich. Aufgrund dieser nachteiligen Randbedingungen ist der Einsatz von Hologrammen mit holografisch gespeicherten kartenindividuellen Daten unter wirtschaftlichen Gesichtspunkten nicht vertretbar.

Je nach Typ des Datenträgers oder des holografischen Standardelements verwendet man unterschiedliche Techniken. Ohne Anspruch auf Vollständigkeit sind zu nennen:
- direktes Aufprägen der Hologrammstruktur auf Aufzeichnungsträger, deren Oberflächenbeschaffenheit dies zuläßt, z. B. auf Kunststoffmaterialien,
- das Heißsiegeln oder Aufkleben von auf einem Zwischenträger realisierten Hologrammen auf den eigentlichen Aufzeichnungsträger, der eine Papier- oder Kunststoffoberfläche aufweisen kann, z. B. Banknote, Wertpapier, Ausweiskarte etc.,
- das Einkaschieren oder Einmontieren von auf Zwischenträgern vorgesehenen Hologrammen in das Innere eines Schichtaufbaus mehrschichtiger Aufzeichnungsträger,
- das Einlagern von Sicherheitsfäden oder Planchetten mit holografischen Beugungsstrukturen in Papier während des Papier-Herstellungsprozesses.

Der heute am häufigsten eingesetzte Prozeß zur Herstellung und Aufbringung von Standardhologrammen auf Datenträger ist der Transfer von Prägehologrammen auf Ausweiskarten. Aus diesem Grund werden der Herstellprozeß und die individualisierenden Maßnahmen beispielhaft anhand dieser Technik vorgestellt. Die wesentlichen Verfahrensschritte sind hierbei das Anfertigen eines Masterhologramms, die Herstellung von Hologrammkopien und das Aufbringen auf das spätere Produkt.

Die Anfertigung des Masters erfolgt in der Regel in manueller Einzelfertigung mit einer sehr teuren Ausrüstung. Entsprechend ist das Masterhologramm mit hohen Kosten belastet. Die Herstellung der Kopien und das Aufbringen auf die Deckfolien der Karten sind maschinell mit hoher Geschwindigkeit und damit relativ kostengünstig durchführbar. Aufgrund dieser Kostenstruktur ist man bestrebt, durch Anfertigen einer möglichst hohen Anzahl von identischen Kopien die Fixkosten pro Hologramm niedrig zu gestalten. Der Zwang zur Massenproduktion führt somit auf dem Sicherheitsbereich, insbesondere auf dem Kartensektor, zu Einschränkungen hinsichtlich des holografischen Fälschungsschutzes.

Zur Reduzierung der für die Hologrammherstellung anfallenden Kosten wurden in diesem Sinne nun Ausführungsformen bekannt, die zwar Hologramme als Echtheitsmerkmal verwenden, bei denen die im Hologramm gespeicherten Daten aber nicht benutzerindividualisiert sind, sondern lediglich eine auf den Kartenausgeber bezogene Individualität aufweisen (Standardhologramme). In diesem Sinne unterscheiden sich zwar die Hologramme unterschiedlicher Kartensysteme voneinander, die Hologramme der einzelnen Karten eines Systems sind jedoch identisch.

Durch die Verwendung von Standardhologrammen (d. h. Duplikate eines Master-Hologramms) für ein Kartensystem, wobei die zu einem System gehörenden Karten eine Serie bildern wurde es nun möglich, die relativ hohen Fixkosten, die für die holografische Aufnahmetechnik anfallen, auf eine hohe Anzahl von Karten zu verteilen. Je nach Umfang der Kartenserie verteilen sich die Kosten somit unter Umständen auf so große Stückzahlen, daß für den Preis des einzelnen Hologramms im wesentlichen nur noch die Duplizierungskosten zu Buche schlagen. Aufgrund dieser Tatsache wurden Hologramme erstmals als Massenprodukt im Sicherheitsbereich wirtschaftlich einsetzbar.

Neben den allgemein bekannten Anwendungen im Euroschecksystem sowie bei den VISA- und Mastercard-Kreditkarten sind stellvertretend für diese Anwendungsvarianten die Patentschriften DE-OS 33 08 831 sowie die EP-PS 0 064 067 zu nennen.

Bekanntermaßen sind die in den derzeit praktizierten Kreditkartensystemen verwendeten Hologramme sogenannte Prägehologramme, bei denen eine Vervielfältigung mittels Prägematrizen möglich ist. Obwohl ein Großteil der Herstellungskosten für die holografische Aufnahmetechnik anfällt, sind die für die Vervielfältigung der Hologramme in der Serienproduktion zu veranschlagenden Kosten doch noch immer so hoch, daß eine wirtschaftliche Herstellung nur dann möglich ist, wenn die für die Aufnahmetechnik und die Herstellung des Hologramm-Masters notwendigen Kosten auf Serien mit vielen Millionen Stück umlegbar sind. Die Produktion von Kleinserien, das heißt wenige zehntausend bis hunderttausend Karten verbietet sich aus finanziellen bzw. wirtschaftlichen Gründen demnach meist noch immer.

Bei der Verwendung gleicher Hologramme innerhalb einer Kartenserie wird zwar erreicht, daß Karten eines Systems besser von Karten eines anderen zu unterscheiden sind; die Fälschung von Karten wird damit jedoch nicht völlig ausgeschlossen, da durch Ausstanzen derartiger Hologramme und übertragen auf andere Karten Manipulationen noch immer möglich sind. Es gibt zwar Maßnahmen, die derartige Manipulationen erschweren sollen, in dem die den Kartenbenutzer betreffenden Hochprägedaten teilweise oder auch vollständig in den Hologrammbereich verlagert werden. Bekanntermaßen sind die Hochprägedaten aber rückprägbar, wodurch derartige Manipulationen in der Praxis zwar für Fachleute, aber nicht für Laien erkennbar sind. Das Vorsehen von kartenindividuellen Hochprägedaten im Bereich des Standardhologrammes bietet somit keinen echten Schutz vor Übertrag auf andere Karten.

Zur Vermeidung auch derartiger Probleme ist in der AT-PS 334 117 die Anwendung von Standardhologrammen zur benutzerbezogenen Individualisierung von Karten beschrieben. Gemäß diesem Vorschlag wird die Kartenindividualisierung durch die Kombination von mehreren Standardhologrammen ermöglicht, die jeweils für sich eine bestimmte Information enthalten, z. B. Buchstaben oder Zahlen, und die durch eine entsprechende Kombination auf den einzelnen Karten eines Systems unterschiedliche Daten, wie z. B. Worte, mehrziffrige Nummern etc., repräsentieren. Durch Aufprägen derartiger Hologramme mit Hilfe eines Standardsatzes von Prägestempeln ist die einfache und kostengünstige Herstellung individueller holografischer Kartendaten möglich.

Da mit dieser Variante vorwiegend alphanumerische Daten aufgebracht werden, aber insbesondere bildmäßige Daten nur bedingt wiederzugeben sind, ist der Gesamteindruck derartiger Hologramme visuell wenig effektvoll, weshalb eine Durchsetzung dieser Individualisierung im Markt bisher nicht möglich war.

Eine weitere Variante der Individualisierung von Dokumenten unter Einbeziehung von Hologrammen ist in der DE-OS 25 55 214 beschrieben. In dieser Ausführungsform wird vorgeschlagen, Beugungsstrukturen in Form von numerischen oder alphanumerischen Schriftzeichen auf einem Dokument aufzubringen. Hierbei wird eine thermoplastische Druckfarbe in Form von Ziffern auf ein Papiersubstrat gedruckt, anschließend wird mit einem großflächigen Stempel die Beugungsstruktur eingeprägt.

Diese Variante eignet sich aber nicht für mehrschichtige Hologrammtypen, die wegen der innenliegenden und damit geschützten Beugungsstruktur zur Herstellung von Datenträgern besonders bevorzugt werden.

Ausgehend von diesem Stand der Technik liegt der Erfindung deshalb die Aufgabe zugrunde, mehrschichtige Beugungsstrukturelemente und insbesondere Hologrammvarianten und Herstellverfahren hierfür vorzuschlagen, die einen den jeweiligen Sicherheitsaspekten angepaßten Individualisierungsgrad der Hologramme und damit einen möglichst breiten Schutz der Daten und Dokumente erlauben und zugleich die Kostenvorteile der Serienproduktion von Standardhologrammen bieten.

Diese Aufgabe wird durch die in dem jeweiligen Kennzeichen der unabhängigen Ansprüche genannten Merkmale gelöst. Weiterbildungen sind in den abhängigen Ansprüchen genannt.

Der Kern der Erfindung ist darin zu sehen, daß die stets aus mehreren Einzelschritten bestehende Herstellung von Hologrammen bzw. Hologrammkarten und dergleichen in einer geeigneten Phase unterbrochen wird, in der ohne wesentliche Einschränkung oder Behinderung der Serienfertigung diese durch gezielte individualisierende Maßnahmen modifiziert oder personalisiert werden. Je nach dem bei welchem Herstellungsschritt die Modifikation vorgesehen ist, sind trotz Verwendung gleicher Hologramm-Master am Endprodukt (der Hologrammkarte) sehr unterschiedliche Hologramm-Ausführungsformen erreichbar. Das Spektrum der Individualisierung reicht dabei von einer für Kleinserien interessanten, im Aussehen vom Standard-Hologramm abweichenden Untermenge gleicher Hologramme bis zu einer vollkommenen Personalisierung, bei der die Standardhologramme zu echten Unikaten umgestaltet werden.

Für die Herstellung von Hologrammen ist die Nutzung unterschiedlichster Technologien notwendig wie holographische Aufnahmetechnik, Vervielfältigung auf ein Serienhalbzeug, Verbindung oder Einbringung auf den Datenträger etc.. Fügt man die individualisierenden Maßnahmen jeweils in den Verfahrensschritten ein, bei denen die Hologramm-herstellung von einer Technologie zur anderen überwechselt, sind diese Maßnahmen relativ einfach in den Verfahrensablauf der Hologramm-Herstellung zu integrieren und ermöglichen dies meist ohne große Eingriffe in den eigentlichen Herstellprozeß und deren Produktionseinrichtungen.

Das erfindungsgemäße Grundpinzip wird im folgenden beispielsweise anhand von Prägehologrammen erläutert, die als Halbzeug auf sogenannten Transferbändern vorgefertigt und im Transferverfahren auf die eigentlichen Datenträger übertragen werden. Dieses Verfahren eignet sich für die Realisierung der Erfindung besonders gut, da dabei die unterschiedlichen technologischen Bereiche, welche für die Herstellung der Masterhologramme, der Standardhologramme (Duplikate), der zu schützenden Datenträger sowie dem Hologrammtransfer auf dem Datenträger besonders klar voneinander getrennt sind. Die Verwendung der erfindungsgemäßen Grundgedanken bei der Nutzung von Volumenhologrammen, Kinegrammen etc. ist sinngemäß aber ebenso möglich, wenn auch nicht immer in der bei Präge-Transferhologrammen möglichen Variationsbreite.

Als besonders vorteilhaft erweist es sich, daß mit dem erfindungsgemäß vorgeschlagenen Verfahren alle wirtschaftlichen Vorteile der Großserienfertigung von Hologrammen sowohl für einzeln individualisierte Hologramme als auch für Kleinserien gleicher Hologramme in gleicher Weise nutzbar sind; zugleich läßt sich aufgrund der Integration der individualisierenden Maßnahmen in den Herstellungsprozeß die Individualisierung irreversibel gestalten. Je nach Art des Eingriffs in den Verfahrensablauf sowie durch Kombination verschiedener Individualisierungsmaßnahmen, lassen sich, ausgehend vom gleichen Master, unterschiedlichste Elementvariationen erstellen. Durch die genannten Verfahren läßt sich schließlich eine Vorabproduktion von standardmäßig vorbereiteten Halbzeug erstellen, das je nach Anwendungsfall beliebig später in den anschließenden Verfahrensschritten individualisiert und/oder fertiggestellt wird.

Weitere Vorteile der Erfindung ergeben sich aus der Figur und den nachfolgenden Ausführungsbeispielen.

Es zeigen
- Fig. 1: die wesentlichen Verfahrensschritte bei der Herstellung und des Transfers von Prägehologrammen auf Datenträger,
- Fig. 2: die Untergliederung der in Fig. 1 dargestellten Verfahrensabschnitte,
- Fig. 3: den Schichtaufbau eines Transferbandes,
- Fig. 4: den Schichtaufbau eines fertigen Hologramms auf einem Substrat;
- Fig. 5: den Verfahrensablauf bei der Herstellung von Prägehologrammen und des Tranfers auf Datenträger und
- Fig. 6 - 24: verschiedene Ausführungsformen von individualisierten Hologrammen.
- Fig. 25: Verfahrensablauf zur Herstellung vom Volumen-Film-Hologrammen

### Verfahren zur Herstellung von Transferpräge-Hologrammen

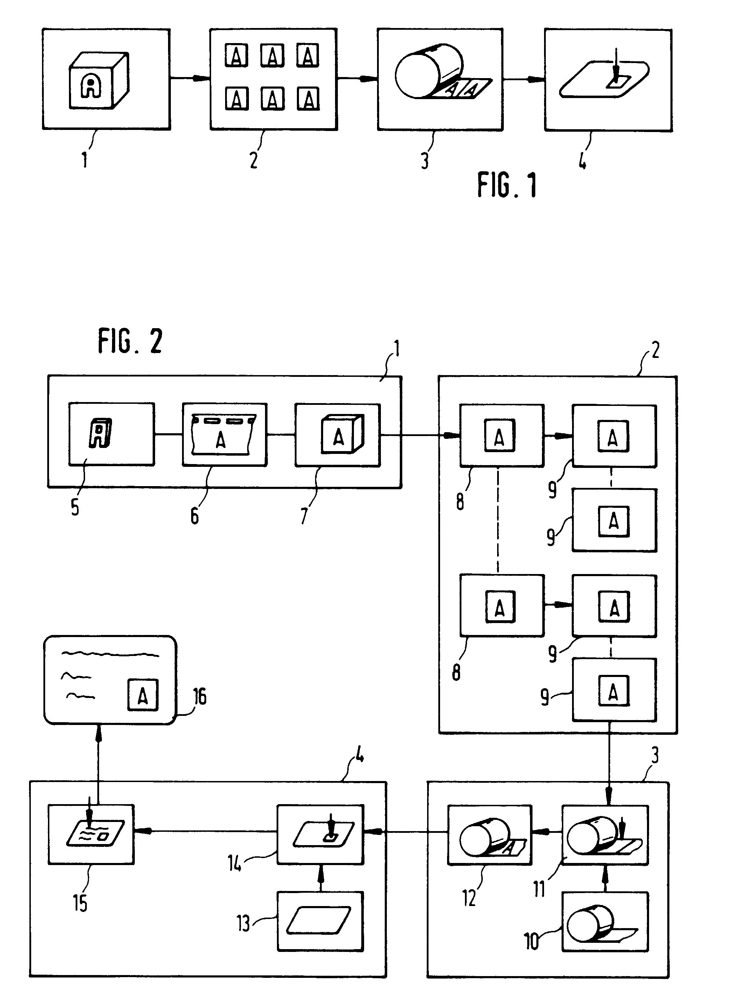

Fig. 1 zeigt die wesentlichen Stufen der Anfertigung von Prägehologrammen und deren Aufbringung auf Datenträgern im Transferverfahren, wie sie nach derzeitigem technischen Stand üblich sind. Das Verfahren gliedert sich somit in
- Anfertigung eines Prägemasters (Pos. 1, Fig. 1),
- Abformen von identischen Prägematrizen (Pos. 2, Fig. 1),
- Prägen der Hologramme auf Transferbänder (Pos. 3, Fig. 1) und
- Übertragen der Hologramme auf das Produkt (Pos. 4, Fig. 1).

Die einzelnen Verfahrensschritte unterscheiden sich bekanntermaßen technologisch so stark voneinander, daß sie in völlig verschiedenen Produktionsbereichen ablaufen. Wegen der Komplexität dieser Verfahrensschritte werden diese sehr häufig sogar in völlig getrennten Industriebetrieben realisiert. Der Übergang von einem Produktionsbereich zum anderen erfolgt an den technologischen Schnittstellen, an denen das Zwischenprodukt als definiertes Halbzeug vorliegt.

Jede dieser in Fig. 1 angedeuteten vier Verfahrensstufen hat ihre technologischen Schwerpunkte. So ist in der Stufe 1 der Prägemastererstellung die eigentliche Fototechnik bzw. Holographietechnik dominant. In diesem Bereich der von der Struktur her mit einem Filmstudio vergleichbar ist, werden die holographisch wiederzugebenden Objekte im Modell (meist im Maßstab 1 : 1) hergestellt, das Filmmaterial holographisch belichtet, die Hologramme (Filme) auf unterschiedliches Filmmaterial kopiert, entwickelt etc. sowie die ersten Prägemaster erstellt. Auf dem Prägemaster liegt das Hologramm in einer feinen Oberflächenreliefstruktur vor, die sich durch mechanisches Abprägen in ausreichend glatte und verformbare Materialien duplizieren läßt. Da beim Abprägen der Reliefstruktur das Relief hohen mechanischen Belastungen und somit auch hohem Verschleiß ausgesetzt ist, benutzt man für die Vervielfältigung der Hologramme üblicherweise jedoch nicht den Prägemaster selbst, sondern davon abgeleitete Prägematrizen. Da auch das Abformen der Prägematrizen von einem Original (Prägemaster) nur begrenzt wiederholbar ist, werden diese in mehrstufigen Verfahren über sogenannte Submaster oder Sub-Submaster etc. erstellt.

Das Abformen der Prägematrizen vom Prägemaster, dem Submaster oder dergleichen erfolgt üblicherweise auf galvanoplastischem Wege. Die dafür notwendigen Verfahrensschritte sind hinlänglich bekannt und sollen hier nicht näher beschrieben werden. Erwähnenswert scheint in diesem Zusammenhang lediglich die Tatsache, daß die in dieser zweiten Produktionsstufe (Pos. 2, Fig. 1) notwendigen Fertigungsbedingungen mit denen der chemischen Industrie gleichzusetzen sind. Die in dieser Verfahrensstufe verwendeten Produktionseinrichtungen bestehen in erster Linie aus galvanischen Bädern, in denen in entsprechenden Elektrolytlösungen von Metallsalzen und chemischen Zusatzstoffen unter Einwirkung von elektrischem Gleichstrom metallische Schichten erzeugt werden, die das Masterrelief wiedergeben.

Nach Vorliegen der Prägematrizen werden diese in der dritten Verfahrensstufe (Pos. 3, Fig. 1) in Prägeautomaten zur Übertragung des Reliefs auf Kunststoffoberflächen etc. benutzt. In einer für das erfindungsgemäße Verfahren bevorzugten Ausführungsvariante werden die Reliefstrukturen in standardisierte, sogenannte Transferbänder eingeprägt, die wiederum als Halbzeug zwischengelagert und auf den späteren "Produkten" in unterschiedlichster Weise Verwendung finden können.

Im Grundsatz ist die Aufbringung des holographischen Reliefs auf das Produkt in ein- oder zweistufigen Verfahren möglich. Bei einstufigen Verfahren wird die Reliefstruktur des Hologramms direkt auf die Oberfläche des mit dem Hologramm auszustattenden Produktes aufgeprägt. Je nach Beschaffenheit des Produktes verbietet sich diese Vorgehensweise aber in vielen Fällen, da das Prägen nur auf glatte verformbare Oberflächen unter Einwirkung von hohem Flächendruck möglich ist. Aus diesem Grunde, aber auch aufgrund der höheren Flexibilität, wird deshalb in der Praxis in der Regel das zweistufige Verfahren gewählt, bei dem das Relief zuerst auf einem Zwischenmedium, z. B. einem Transferband, erzeugt und in dieser Form auf dem Produkt aufgeklebt, aufgesiegelt oder dergleichen fixiert wird. Obwohl das erfindungsgemäße Prinzip bei beiden Versionen nutzbar wäre, wird die zweistufige Variante bevorzugt, da bei dieser Ausführungsform eine größere Variationsbreite gegeben ist. Dies gilt insbesondere auch dann, wenn als Zwischenmedium ein Transferband Verwendung findet.

Die Herstellung der Transferbänder erfolgt je nach gefordertem Aufbau bzw. je nach gewünschter Hologrammqualität und Sicherheitsstandard ebenfalls in mehreren Einzelschritten. In diesem Prozeß werden mehrschichtige neutrale Folienbänder vorbereitet, in die die Hologramme aneinandergereiht eingeprägt werden. Anschließend erfolgt eine Zusatzbeschichtung der geprägten Bänder, um die feine Reliefstruktur vor mechanischen Beschädigungen, aber auch vor eventuellen Manipulationen zu schützen. In dieser dritten Verfahrensstufe (Pos. 3, Fig. 1) finden wegen der geforderten Qualität und der Feinheit der zu erzeugenden Strukturen aufwendige und komplexe mechanische Produktionsautomaten Anwendung. Die in dieser Verfahrensstufe verwendete technische Ausrüstung entspricht im wesentlichen der in der Feinmechanik sowie der Druck- und Kunststofftechnik üblichen.

In der vierten Stufe (Pos. 4, Fig. 1) erfolgt der Transfer des fertiggestellten Hologramms vom Transferband auf das spätere Produkt. Im vorliegenden Fall werden als Produkt vorzugsweise Ausweiskarten, Wertpapiere, Banknoten etc. genannt. Die Verwendung auf Videokassetten, Schallplatten, Etiketten der Bekleidungsindustrie etc. ist aber ebenso sinnvoll und denkbar. Die Übertragung des Hologramms wird ähnlich wie in der dritten Verfahrensstufe in hochautomatisierten Produktionseinrichtungen vorgenommen. Im Gegensatz zur Stufe drei (Pos. 3, Fig. 1) sind hier jedoch auch die produktspezifischen Aspekte, z. B. die der Wertpapier- oder Kartentechnologie, mit einzubeziehen. Um eine Beeinträchtigung der Qualität von Hologramm- und/oder Produkt durch den Transfer zu vermeiden, sind die jeweils in Wechselbeziehung stehenden Parameter beider Elemente, wie z. B. Materialeigenschaften, Verarbeitungstemperaturen, mechanische Belastbarkeit etc. entsprechend zu berücksichtigen bzw. aufeinander abzustimmen. Unterschiedliche Produkte können somit in diesem Sinne auch zum Teil sehr unterschiedliche Maßnahmen bei der Aufbringung der Hologramme erforderlich machen. Der Transfer der Hologramme findet in der Regel entweder beim Produkthersteller selbst oder aber bei Zulieferanten statt, die für das Produkt die Verpackung, Etiketten oder dergleichen herstellen.

Die in Fig. 1 dargestellten Verfahrensblöcke werden im folgenden anhand der Fig. 2 näher erläutert.

### Fertigung des Prägemasters

Von dem später darzustellenden Objekt wird in der Regel ein räumliches Modell erstellt, das für die derzeit gebräuchlichen Holographietechniken im Maßstab 1 : 1 vorliegen muß. Der hierfür notwendige Verfahrensschritt ist in Fig. 2 mit Pos. 5 gekennzeichnet. Nach Vorliegen des Modells wird in Zwischenschritt 6 ein laserrekonstruierbares Hologramm auf einem Silberschichtfilm hergestellt. Dieses auch als Primärhologramm bezeichnete Hologramm wird anschließend, um das holografische Bild auch mit weißem Licht (ohne Laser) betrachten zu können, in der sogenannten Regenbogentechnik auf einen zweiten Hologrammfilm umkopiert. Als lichtempfindliches Material werden bei diesem Kopiervorgang vorzugsweise Fotoresistschichten verwendet. Durch diese Maßnahme wird das im Primärhologramm als Grauwertstruktur vorliegende Hologramm in ein Oberflächenrelief umgewandelt. Das derart erzeugte Hologramm wird üblicherweise als Sekundärhologramm bezeichnet. Im letzten Zwischenschritt 7 der Verfahrensstufe 1 wird vom Sekundärhologramm auf elektrogalvanischem Wege der sogenannte Prägemaster erstellt, bei dem die holografische Information ebenfalls in Form eines Oberflächenreliefs vorliegt.

### Abformen von Prägestempeln

Der in Zwischenschritt 7 gefertigte Prägemaster stellt ein teures Unikat dar und wird wegen der Verletzungs- und Abnutzungsgefahr im allgemeinen nicht zum Prägen von Hologrammen verwendet. Vielmehr werden in einem zwei- oder mehrstufigen Verfahren vom Master wiederum auf elektrogalvanischem Wege sogenannte Submaster (Zwischenschritt 8) und davon die eigentlichen Prägematrizen abgeformt (Zwischenschritt 9). Ausgehend vom Master liegen die Submaster als Negativreliefs vor. Vom Submaster werden als Positivrelief die eigentlichen Prägematrizen erstellt, die dann zum Prägen des Oberflächenreliefs in ein plastisches Material Verwendung finden. Die Lebensdauer einer Prägematrize beträgt selten mehr als 10 000 Prägungen, weshalb bei großen Auflagezahlen eine beträchtliche Anzahl von derartigen Prägematrizen herzustellen ist.

### Anfertigen des Transferbandes

Das Transferband ist mehrschichtig aufgebaut und besteht zumindest aus einer Trägerschicht und einer erneut mehrschichtig ausgebildeten Prägeschicht. Die Herstellung des Transferbandes erfolgt in mehreren Verfahrensschritten, die in Fig. 2 in eine Vorbereitungsstufe 10, die Hologramm-Prägestufe 11 sowie die Nachbearbeitungsphase 12 untergliedert sind.

In der Vorbereitungsstufe 10 wird das Trägerband mit einem prägbaren Material beschichtet und zwar derart, daß beim späteren Transfervorgang eine Trennung unter Wärme- und Druckeinwirkung problemlos möglich ist. In einfachsten Fall erreicht man dies durch Vorsehen einer Wachsschicht zwischen dem Trägerband und der prägbaren Kunststoffschicht. In den Fällen, in denen das Hologramm in Reflexion erkennbar sein soll, wird auf oder unter der Prägeschicht eine weitere Metallschicht mit hohem Reflexionsvermögen vorgesehen.

In der Fertigungsstufe 11 wird mit Hilfe der im Zwischenschritt 9 erzeugten Prägematrizen die Reliefstruktur in die prägbare Kunststoffbeschichtung eingepreßt. Anschließend wird das so erzeugte Oberflächenrelief mit mindestens einer Schutzschicht abgedeckt, die das Relief vor mechanischen Beschädigungen schützt. Diese Schutzschicht ist mit dem Material der prägbaren Schicht derart abzustimmen, daß die optischen Eigenschaften des Hologramms so wenig wie möglich beeinträchtigt werden. Aus verschiedenen hier nicht zu erläuternden Gründen werden über der ersten Schutzschicht weitere für den Schutz des Hologramms notwendige Schichten aufgebracht. Als letzte Schicht wird schließlich eine Heißklebeschicht vorgesehen, die den problemlosen Transfer und das Anhaften des Hologramms auf dem späteren Produkt sicherstellt.

### Transfer auf das Produkt

Die Übertragung der Hologramme auf das Produkt, z. B. Karten, Wertpapiere oder dergleichen, geschieht, wie bereits erwähnt, in der Verfahrensstufe 4. Ähnlich wie bei der Herstellung des Transferbandes wird auch hier in einem Zwischenschritt 13 ein neutrales Halbzeug vorbereitet. Im Fall der Ausweiskarte ist dies der fertige Kartenrohling, bei dem das bedruckte Karteninlett bereits mit Deckfolien beschichtet und, falls notwendig, mit Magnetstreifen, Unterschriftsstreifen und dergleichen ausgestattet ist. Die in dieser Form vorliegenden Kartenrohlinge weisen üblicherweise allerdings noch keine personenbezogenen Daten des späteren Karteninhabers auf.

Die Übertragung des Hologramms vom Transferband geschieht im Zwischenschritt 14, in dem in einem sogenannten Heißprägeautomaten das Hologramm über dem zu plazierenden Bereich der Karte positioniert und mit Hilfe eines heißen Prägestempels auf die Karte aufgepreßt wird. Durch Abziehen des Trägerbandes reißt der das Hologramm enthaltende Mehrschichtaufbau genau an der Umrißlinie des Prägestempels und löst sich somit vom Transferband. Die derart mit einem Hologramm ausgestattete Karte wird im Zwischenschritt 15 mit den benutzerbezogenen Daten ausgestattet, beispielsweise mittels eines Laserpersonalisierungsverfahrens.

Am Ende dieses Produktionsverfahrens steht die fertige Karte 16, die, wie in Fig. 2 schematisch dargestellt, nun mit einem plazierten Hologramm 17 und den aus benutzerbezogenen und neutralen Daten bestehenden Datensatz 18 ausgestattet sind.

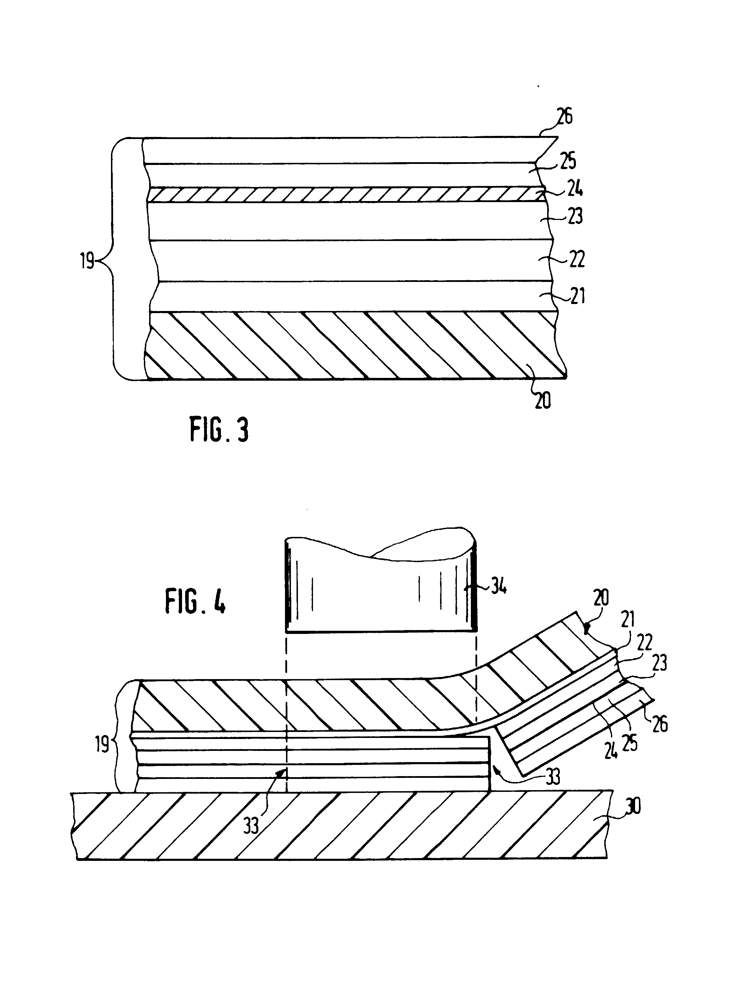

In Fig. 3 ist das Transferband 19 im Schnitt dargestellt. Es besteht aus einem Trägerband 20, auf dem eine Trennschicht 21 aus Wachs aufgebracht ist. Darüber befindet sich eine Schutzschicht 22 und eine Schicht aus thermoplastischem Material 23, welches etwas weniger wärmeempfindlich als die Trennschicht 21 ist. Das thermoplastische Material 23 ist mit einer dünnen, nicht tragfähigen Metallschicht 24 bedeckt, die vorzugsweise aus aufgedampften Aluminium besteht und wenigstens weniger als 5 000 Angström Dicke aufweist. Zur Herstellung von transparenten Hologrammen wird auf die Metallschicht 24 verzichtet. Die Schichten 20 - 24 stellen ein Halbzeug dar (Rohband), in das die Reliefstruktur eingeprägt wird.

Um das Oberflächenreliefmuster einzuprägen, wird eine beheizte Prägematrize auf die Metallschicht 24 aufgepreßt. Unter Druck- und Wärmeeinwirkung gibt das thermoplastische Material 23 nach, wodurch sich das Reliefmuster in die Aluminiumschicht 24 einprägt. Anschließend werden auf die Metallschicht 24 eine zweite Schutzschicht 25 und eine Heißklebeschicht 26 aufgetragen. In speziellen Varianten sind die Schichten 25 und 26 auch zu einer Schicht zusammengefaßt. Das so hergestellte Material stellt ein Zwischenprodukt dar, das sich ebenfalls als Halbzeug leicht lagern und transportieren läßt.

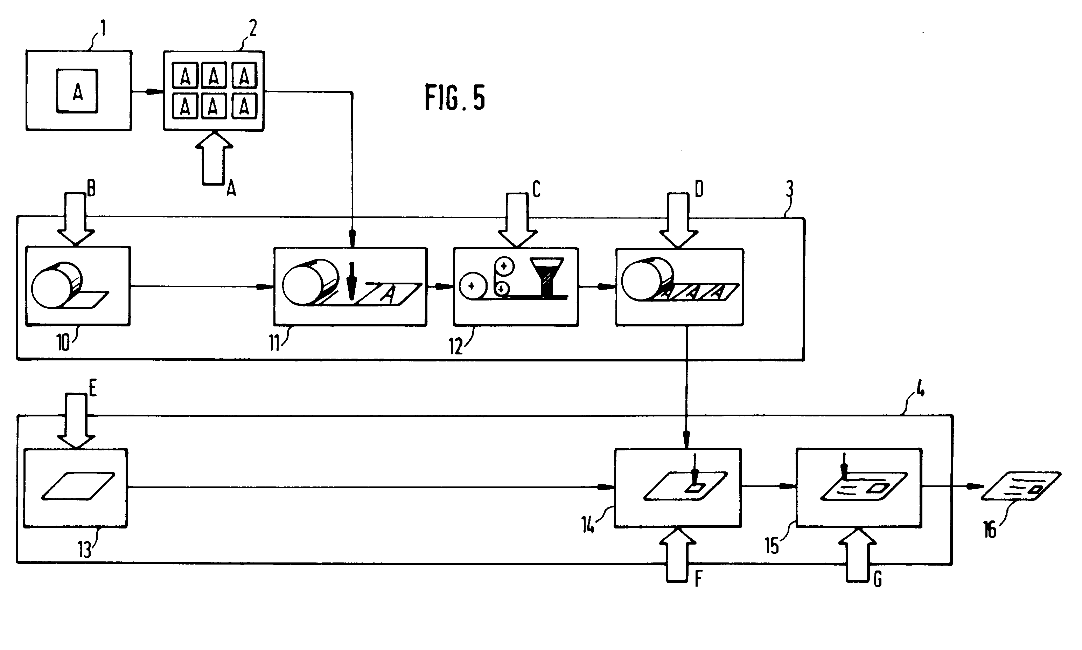

Zum Aufbringen des Hologramms auf das Produkt wird das Transferband 19, wie in Fig. 4 gezeigt, mit der Heißklebeschicht 26 auf ein Substrat 30, beispielsweise einer Karte, aufgelegt und angepreßt. Das Anpressen erfolgt mit einem beheizten Transferstempel 34 oder alternativ auch mit einer Transferrolle. Unter der Druck- und Wärmeeinwirkung verbindet sich die Heißklebeschicht 26 mit dem Substrat 30, gleichzeitig schmilzt die Trennschicht 21 und ermöglicht das Abziehen des Trägermaterials 20. Die Verbindung mit dem Substrat 30 und das Abtrennen des Trägers 20 erfolgt nur in den Flächenbereichen, in denen die Trennschicht 21 erhitzt ist, d. h. nur exakt unterhalb des Transferstempels 34. In den anderen Flächenbereichen bleibt der Schichtaufbau und das Trägermaterial fest miteinander verbunden. Da der Schichtaufbau 22 - 26 entlang der Konturkanten des Transferstempels 34 beim Abziehen des Trägerfilms vom Substrat reißt, entspricht die Kontur des derart transferierten Hologramms stets der Kontur des Prägestempels, wobei auf diese Weise auch kompliziertere Umrißstrukturen realisierbar sind. Der Prozeß des Heißsiegelns ist jedoch bekannt und wird beispielsweise in der DE-OS 33 08 831 beschrieben.

### Individualisierungsmaßnahmen bei Transferpräge-Hologramm

In Fig. 5 ist der gesamte Fertigungsablauf der Herstellung eines Hologramms und dessen Aufbringung auf einen Datenträger nochmal zusammen mit möglichen Individualisierungsmaßnahmen in einem Flußdiagramm dargestellt. Im Gegensatz zu der in Fig. 2 beschriebenen Darstellung sind in Fig. 5 die Verfahrensstufen 1 - 4, wie in der Praxis üblich, als parallel ablaufende Fertigungsprozesse gezeigt, wobei im wesentlichen nur auf die Verfahrensschritte Bezug genommen ist, die sich im Sinne der Erfindung besonders zur Individualisierung des Standardhologramms eignen. Der besseren Vergleichbarkeit wegen sind gleiche Positionen auch hier mit gleichen Positionsnummern gekennzeichnet.

Die erfindungsgemäßen Eingriffsmöglichkeiten zur Indididualisierung von Prägehologrammen sind in Fig. 5 mit Pfeilen gekennzeichnet, die mit A - G beziffert sind.

Eingriffsmöglichkeiten bieten sich demnach an
- beim Herstellen der Prägematrizen (A),
- beim Anfertigen des Rohbandes (B),
- bei der Fertigstellung des Transferbandes (C),
- am fertigen Transferband (D),
- bei der Vorbereitung des Substrats (E),
- beim Transfer des Hologramms auf das Substrat (F),
- am Endprodukt (G).

Im folgenden werden die verschiedenen Eingriffsmöglichkeiten A - G weiter erläutert.

### Individualisierungsvariante A (beim Herstellen der Prägematrizen)

Das Herstellen der Prägematrizen erfolgt im allgemeinen durch galvanisches Kopieren der Reliefstruktur. Hierzu existieren verschiedene gleichwertige ein- oder mehrstufige Verfahren. In einem häufig angewandten zweistufigen Prozeß wird auf die Oberfläche des Masters eine aushärtbare Kunststoffmasse, wie beispielsweise ein Epoxydharz, aufgetragen. Nach dem Aushärten wird der Kunststoff vom Master abgetrennt, wodurch man eine Negativform der Reliefstruktur erhält. Durch Elektroplattieren wird auf die Negativform eine Nickelschicht aufgetragen. Diese Nickelschicht, die ein positives Abbild des Masters ist, ist die Grundlage für die weitere Fertigung des Prägestempels.

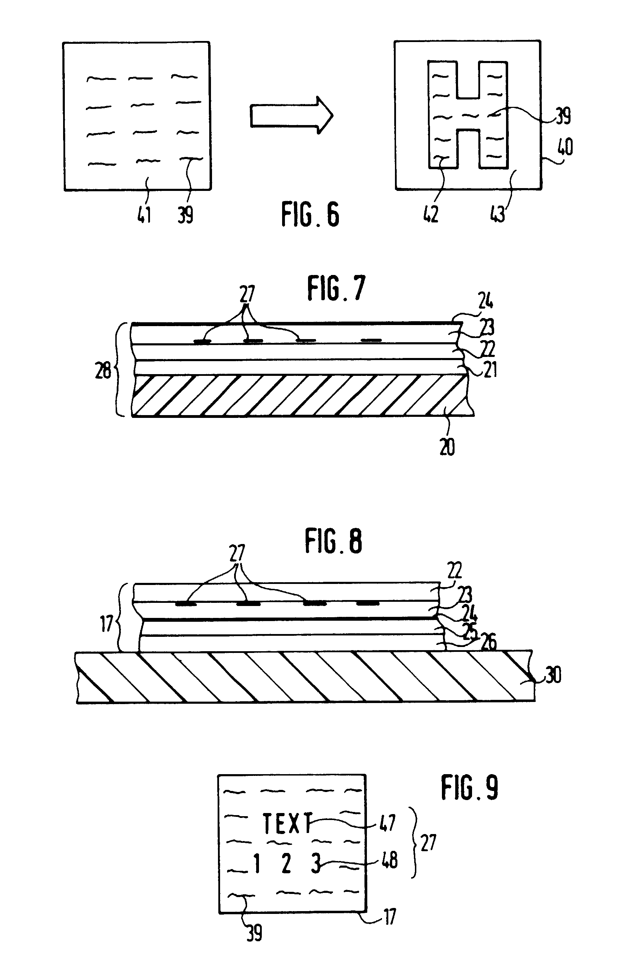

Dem späteren holographischen Bild kann man, wie in Fig. 6 dargestellt, ein individuelles Aussehen geben, indem man während des Abformens nur ausgewählte Flächenbereiche des Masters überträgt. Dies erreicht man, indem man das spätere holographische Bild entweder nur im Umriß der Fläche eines Buchstabens, einer Zifferung, eines Firmenzeichens oder dergleichen auf die Prägematrizen überträgt oder indem die Prägematrizen so vorbehandelt werden, daß die Reliefstruktur nur auf diesen Bereich des Prägestempels ausgebildet werden.

Zur Herstellung des in Fig. 6 gezeigten entsprechend individualisierten Hologramms existieren somit eine Vielzahl gleichwertiger Vorgehensweisen. In einer speziellen Variante werden bestimmte Flächenbereiche des Masters mittels der Fotolithographie abgedeckt. Auf die Oberfläche des Masters wird hierzu ein positiv arbeitender Fotoresistlack aufgetragen. Er wird anschließend über eine Maske belichtet, aus der die Form des Buchstabens oder des Firmenzeichens ausgespart ist. Beim Entwickeln des Lacks werden die belichteten Flächen freigelegt, während die unbelichteten Flächen bedeckt bleiben. Von diesem individualisierten Master wird der Prägestempel in der bekannten Weise abgeformt, wobei die holographische Reliefstruktur nur in den ausgesparten Flächenbereichen übertragen wird.

Bei dem in Fig. 6 gezeigten Beispiel wird ein auf diese Weise fertiggetelltes Prägehologramm 40 dargestellt. Im Gegensatz zum Standardhologramm 41 ist im Prägehologramm 40 die Reliefstruktur bzw. die holographische Information nur in einem ausgewählten Flächenbereich 42 symbolisiert durch den Buchstaben H vorhanden. In den restlichen Flächenbereichen 43 ist lediglich die ungeprägte Oberfläche der Metallschicht zu erkennen, so daß unter bestimmten Betrachtungswinkeln im Bereich 42 die holographische Information aus der insgesamt spiegelnden Fläche 40 visuell erkennbar hervortritt.

Der Master kann auch mehrfach zur Herstellung individualisierter Kopien verwendet werden, indem man die abgedeckten Bereiche mit geeigneten Lösungsmitteln wieder freilegt und den Individualisierungsvorgang mit anderen Masken wiederholt.

Das Verfahren läßt sich in gleicher Weise auch auf Submaster oder die Prägematrizen selbst anwenden.

Bei den Prägematrizen können wegen der ohnehin begrenzten Lebensdauer im Gegensatz zum Prägemaster auch irreversible Verfahren eingesetzt werden. Zur Individualisierung können hierfür beispielsweise die Reliefstrukturen in bestimmten Bereichen durch chemische oder feinmechanische Prozesse abgetragen oder verändert werden. Auch ist es möglich, mit feinmechanischen Geräten die Reliefstruktur selektiv abzutragen oder zu zerstören.

Mit den auf diese Weise individualisierten Prägematrizen können pro Matrize einige wenige tausend individualisierte Hologramme geprägt werden. Werden größere Stückzahlen benötigt, sind mehrere Prägematrizen in identischer Weise zu individualisieren.

### Individualisierungsvariante B (beim Anfertigen des Rohbandes)

Die Herstellung des Transferbandes läuft in mehreren Phasen ab. In der Vorbereitungsphase wird zunächst ein in Fig. 7 gezeigten Rohband 28 hergestellt. Hierzu wird auf einem Trägermaterial 20, z. B. einer Polyesterfolie, zuerst eine Trennschicht 21, darauf eine Schutzlackschicht 22 und schließlich eine thermoplastische Schicht 23 aufgetragen. Üblicherweise wird auf die oberste Schicht noch eine Metallschicht 24 aufgedampft, wenn das spätere Prägehologramm ein Reflexionshologramm sein soll. Bei Transmissionshologrammen ist die Metallschicht 24 wegzulassen. Der so beschriebene Schichtaufbau stellt das Rohband 28 dar.

Die Individualisierung des Rohbandes erfolgt durch entsprechende Modifikation des Schichtaufbaus, in welchem entweder die Schichten selbst variiert werden, z. B. durch unterschiedliche Einfärbung oder Veränderung einer oder mehrerer dieser Schichten oder durch gezieltes Einbringen von Zusatzelementen, z. B. von Druckbildern, die dem Standardhologramm im Endzustand (auf dem späteren Produkt) visuell erkennbar überlagert sind.

Für die Großserienfertigung von Standardhologrammen benötigt man eine große Anzahl von Rohbändern. Durch entsprechende Modifikation des Schichtaufbaus lassen sich bereits ohne weitere technische Maßnahmen Standardhologramme erzeugen, die sich sowohl farblich als auch vom Gesamteindruck her sehr wesentlich unterscheiden. Diese Maßnahmen können sich sowohl auf einzelne Rohbänder als auch auf Chargen von Rohbändern beziehen.

Eine erste Variante der Rohband-Individualisierung besteht darin, die Schutzlackschicht 22 und/oder die thermoplastische Schicht 23 individuell einzufärben. Da diese beiden Schichten später auf dem Produkt, wie in Fig. 8 gezeigt, über der Reliefstruktur zu liegen kommen, verwendet man hierzu vorzugsweise transparente Farben. Eine Unterscheidung derartig individualisierter Hologramme ist so beim fertigen Produkt, z. B. der Karte 30 (Fig. 8), durch den jeweils für sie typischen Farbeindruck möglich.

In einer anderen Variante werden auf die thermoplastische Schicht 23 verschiedene Metalle 24 aufgedampft, die sich in ihrer Eigenfarbe unterscheiden. Verwendet man in diesem Sinne beispielsweise Kupfer, Silber oder Gold, lassen sich mit diesen Metallen drei verschiedenfarbige Hologrammtypen erstellen. Die Farbe der Metallschichten kann somit ganz gezielt auch auf den farblichen Gesamteindruck des Kartenlayouts abgestimmt sein und somit beispielsweise zur Kennzeichnung von Karten mit unterschiedlichem Berechtigungsumfang eingesetzt werden.

In einer dritten Variante wird auf eine der Schichten 22, 23 des Rohbandes mit konventionellen Druckverfahren ein individualisierendes Druckbild aufgetragen. Als Druckverfahren eignen sich Offsetdruck, Siebdruck oder andere bekannte Drucktechniken. Im Sinne einer Kleinserienindividualisierung kann das Druckbild über eine bestimmte Anzahl von Hologrammen unverändert bleiben, wobei dieses Druckbild vorzugsweise auf die holografische Abbildung abgestimmt ist, so daß es im Sinne einer graphischen Komposition zur holographischen Information eine Umrandung, ein Zentralmotiv oder dergleichen darstellt. Der Gesamteindruck eines derart individualisierten Hologramms wird im Endzustand somit gleichermaßen durch die holographische Aufzeichnung und das Druckbild bestimmt.

In einer weiteren Variante wird das Druckbild mit Mustern oder Daten versehen, die von Hologramm zu Hologramm variieren. Ein Beispiel hierfür stellt eine fortlaufende Numerierung dar, die mit Hilfe eines Zifferndruckwerkes oder dergleichen erzeugt werden kann.

Wenn das Druckbild auf dem späteren Datenträger in einer bestimmten Ausrichtung zum Hologramm erscheinen soll, so ist darauf zu achten, daß das Druckbild und das spätere Hologramm registergenau ausgelegt sind. Für ein registergenaues Bearbeiten können die in der Drucktechnik bekannten Maßnahmen wie Randlochung, Registermarken und dergleichen in bekannter Weise eingesetzt werden.

Die Vielzahl der Variationsmöglichkeiten schließt zur Erzeugung bestimmter optischer Eindrücke und zur Realisierung spezieller Individualisierungsformen die Verwendung unterschiedlicher Drucktechniken, Farbstoffe, Druckfarben und Metallbedampfungen ein. Besonders erwähnt sei in diesem Zusammenhang auch die Verwendung von lumineszierender oder phosphoreszierender Stoffe, welche spezielle Individualisierungsmaßnahmen unter Umständen nur bei spezieller Beleuchtung erkennbar machen.

In den Fig. 7 - 9 ist ein Prägehologramm 17 dargestellt, das im Sinne der vorangehenden Ausführungen mit einer individuell bedruckten Schutzlackschicht 22 ausgestattet ist. Das Druckbild 27 wurde auf die Oberfläche der Schutzlackschicht 22 aufgetragen und anschließend mit der thermoplastischen Schicht 23 abgedeckt und über dieser Schicht mit einer Metallschicht 24 versehen. Auf dieses Rohband 28 werden, wie bereits beschrieben, die Reliefstrukturen des Hologramms aufgeprägt. Nach dem Aufprägen weiterer Schichten 25, 26 ist die Herstellung des Transferbandes abgeschlossen.

Die Fig. 8 zeigt den derart individualisierten Schichtaufbau, wie er auf einem späteren Produkt, einer Karte 30 angeordnet ist. Entsprechend dieser Darstellung ist das Druckbild 27 nun über der Metallschicht 24 und somit auch über der Reliefstruktur des Hologramms angeordnet. Dem visuellen Betrachter erscheint das Druckbild 27 somit als eine vom Betrachtungswinkel unabhängige Druckbildinformation, die auf einem metallisch glänzenden Hintergrund angeordnet ist, auf dem die innerhalb eines definierten Winkelbereiches die holographischen Informationen 29 großflächig erkennbar sind. Das in Fig. 9 dargestellte Druckbild 27 weist sowohl Daten 47 auf, die in der Serie des individualisierten Hologramms gleich bleiben als auch Daten 48, die von Hologramm zu Hologramm variieren.

### Individualisierungsvariante C (bei der Fertigstellung des Transferbandes)

In der nächsten Fertigungsphase 11 wird das holographische Reliefmuster unter Druck- und Wärmeeinwirkung in die aufgedampfte Metallschicht 24 eingeprägt, wobei bekanntermaßen je nach Fertigungsverfahren das Prägen und das Bedampfen in ihrer Reihenfolge vertauscht werden können. In der Schlußphase 12 wird auf der geprägten Seite des Schichtverbandes ein Schutzlack 25 und eine darauf liegende Klebeschicht 26 aufgetragen. Ein Schnitt durch das fertige Transferband 19 ist in Fig. 3 gezeigt.

Zur Individualisierung kann in Verfahrensschritt 12 ein individualisierendes Druckbild direkt auf der geprägten Metallschicht 24 oder auf der Schutzschicht 25, die anschließend von der Heißkleberschicht 26 abgedeckt wird, vorgesehen werden. Die Druckverfahren und Druckmuster können ähnlich gewählt werden wie bei der Individualisierungsvariante B. Allerdings muß sichergestellt werden, daß beim Bedrucken das in der Prägeschicht 23, 24 vorliegende Relief des Hologramms nicht beschädigt wird.

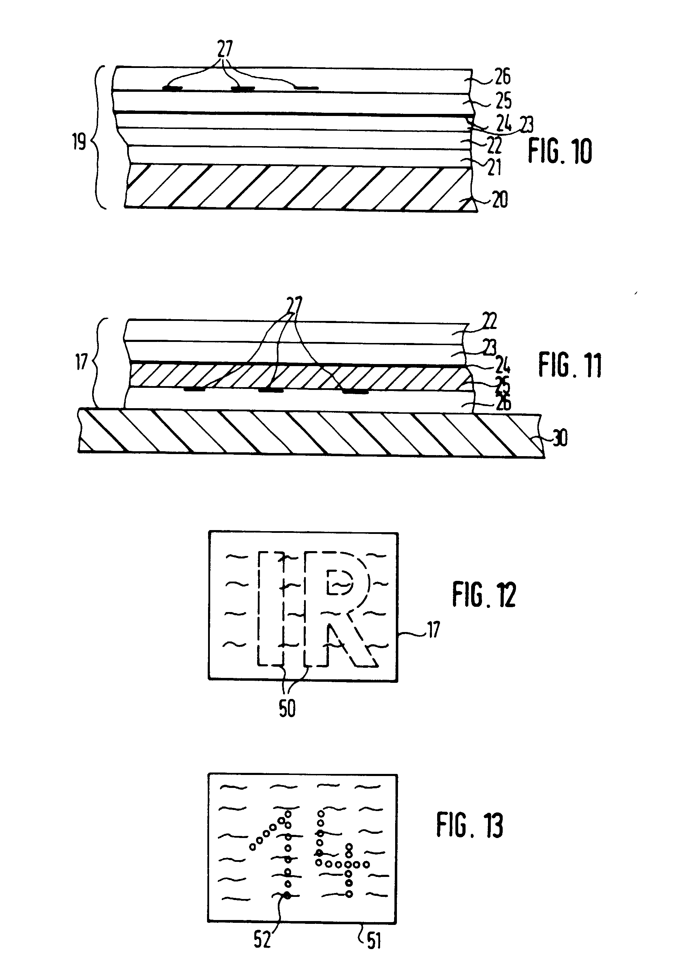

Ein auf diese Weise hergestelltes Transferband ist in Fig. 10 wiedergegeben, wobei in diese Ausführungsform das Druckbild zwischen Heißkleberschicht 26 und Schutzschicht 25 vorliegt.

Nach dem Transfer des Hologramms auf den Kartenkörper kommt, wie aus Fig. 11 ersichtlich, das Druckbild zwischen Kartenkörper 30 und Metallschicht 24 zu liegen. Da das Druckbild 27 nun für den Betrachter unterhalb der reflektierenden Metallschicht 24 angeordnet ist, sind somit besondere Maßnahmen notwendig, um dieses Druckbild maschinell oder visuell erkennbar zu machen.

Das Sichtbarmachen von nach dem Reliefprägen aufgebrachter Druckbilder ist verständlicherweise am einfachsten möglich, wenn auf die Metallschicht 24 im Hologrammaufbau verzichtet wird. In diesem Fall spricht man von einem sogenannten Transmissionshologramm, das durch entsprechende Maßnahmen, die im Zusammenhang mit den Individualisierungsmaßnahmen E besprochen werden, ebenfalls gut nutzbar sein kann.

Statt dem vollständigen Weglassen kann auch durch Verringerung der Schichtdicke in den Bereichen von einigen 10 Angström eine Teildurchlässigkeit erzielt werden, die das Druckbild ausreichend deutlich erkennbar läßt. Durch Verwendung spezieller Metalle kann ein zusätzlicher Farbeffekt erzielt werden, da verschiedene Metalle, wenn sie in extrem dünnen Schichten vorliegen, im Auflicht und Durchlicht unterschiedliche Farbeindrücke aufweisen.

Alternativ dazu kann statt einer Metallschicht auch eine dielektrische Schicht aufgedampft werden. Je nach Schichtaufbau weisen derartige Schichten besondere spektrale Eigenschaften auf, die ebenfalls im Durch- und Auflicht nutzbar sind. Stellvertretend für zahlreiche optische Erscheinungsformen seien teildurchlässige Breitbandverspiegelungen und spektral enge Reflexionsbänder mit Farbwechselspiel beim Verändern des Betrachtungswinkels genannt. Bei diesen Ausführungsvarianten ist das Druckbild ebenfalls nur unter bestimmten Betrachtungswinkeln erkennbar. In einer weiteren Variante wird die Metallschicht 24 als feines Raster ausgebildet, das beispielsweise aus nebeneinanderliegenden metallisch reflektierenden und transparenten Bereichen zusammengesetzt ist. Vorzugsweise gibt man den transparenten Bereichen eine Rasterbreite im Bereich von 1/10 mm und weniger, wodurch die Raster vom Auge nicht mehr aufgelöst werden können und trotz der vorhandenen Lücken als homogene teilreflektierende Fläche erscheinen. In diesem Fall ist das Druckbild 27 unter jedem Betrachtungswinkel erkennbar. In den Fällen, in denen das Druckbild 27 ausschließlich zur maschinellen Erkennung genutzt werden soll, ist in einer weiteren Ausführungsform die Verwendung von dielektrischen Schichtaufbauten sinnvoll, die im langwelligen Spektralbereich spiegelnd wirken, im kurzwelligen dagegen transparent sind. Setzt man die Filterkante an die Grenze zwischen US-Licht und sichtbarem Licht, so bleibt die Kennzeichnung für das Auge verborgen, wird aber für einen UV-empfindlichen Detektor identifizierbar.

In ähnlicher Weise ist eine nur im Infrarotbereich lesbare Schrift des Hologramms erzielbar, wenn die Metallschicht 24 als IR-durchlässige Schicht ausgebildet ist. Sie ist beispielsweise mit einem Schutzlack 25 abgedeckt, der im sichtbaren Spektralbereich undurchlässig schwarz erscheint und im IR-Bereich transparent und teildurchlässig ist. Das Druckbild 27 besteht in diesem Fall aus einer IR-reflektierenden Farbe und liegt, wie zuvor beschrieben, zwischen der Schutzlackschicht 25 und der Klebeschicht 26. Auf der späteren Karte ist das holografische Bild vor dem teilverspiegelten schwarz wirkenden Hintergrund visuell deutlich erkennbar. Zugleich ist das in Fig. 12 strichliert eingezeichnete IR-Druckbild 50 mit geeigneten Sensoren lesbar.

Je nach Auslegung des Druckbilds kann auch hier eine für eine vorbestimmte Aufgabenzahl unveränderte oder auch eine fortlaufend variierende Kennzeichnung realisiert werden. Ist das Druckbild 27 als im nicht sichtbaren Spektralbereich lesbare Information ausgelegt, so kann diese auch auf diese Bedürfnisse weiter optimiert werden, indem sie nicht als alphanumerische Beschriftung, sondern als Maschinencode, z. B. in Form eines Balkencodes oder dergleichen, ausgeführt ist.

Eine weitere Möglichkeit der Individualisierung, in der die Form des Hologramms variiert wird, besteht darin, daß bei der Fertigstellung des Transferbandes die Klebeschicht 26 entsprechend strukturiert wird. Hierbei wird die Klebeschicht als Muster auf den Schichtverbund aufgetragen. Beim Transfer auf das Substrat 30 können auch bei großflächiger Wärme- und Druckeinwirkung durch den Heißprägestempel nur die Bereiche auf dem Substrat 30 anhaften, die mit der Heißkleberschicht 26 beschichtet sind. Je nach Form und Flächendeckung der Heißkleberschicht 26 werden somit gegebenenfalls auch unabhängig von der Form des Prägestempels gezielt nur definierte Bereiche des Hologramms transferiert. Dieses Verfahren ist eine besonders günstige Variante der Individualisierung, da sie im letzten Arbeitsgang der Transferbandherstellung vorzusehen ist und somit in einem relativ späten Stadium der Transferbandherstellung eingefügt werden kann. Da das Transferband ohne Klebeschicht 26 als Halbzeug zwischengelagert werden kann, ist durch diese Ausführungsvariante ebenfalls eine sehr kurzfristige Individualisierung von auf Lager befindlichen Transferbänder in beliebiger Stückzahl möglich.

### Individualisierungsmaßnahme D (am fertigen Transferband)

Nach vollständiger Fertigstellung des beispielsweise in Fig. 3 dargestellten Transferbandes 19 sind verschiedene weitere Individualisierungsmöglichkeiten gegeben. Die Individualisierung in diesem Verfahrensstadium ist besonders günstig, da das Transferband in dieser Ausführungsform einerseits als fertiges Zwischenprodukt vorliegt und andererseits durch die in diesem Verfahrensstadium vorhandenen Schutzschichten relativ gut vor Beschädigungen geschützt ist.

Die Individualisierungsmaßnahmen beruhen in erster Linie auf dem Einschreiben von individuellen Daten auf eine oder mehrere Schichten des Transferbandes oder durch eine irreversible Umwandlung oder einen Abtrag des Schichtmaterials.

Zum Einschreiben von Daten bietet sich unter anderem die Laserbeschriftung an. Hierbei werden mit einem Laserbeschrifter durch die Trägerfolie 20 oder durch die Schutzlackschicht 26 hindurch irreversible Veränderungen oder Zerstörungen im Schichtaufbau hervorgerufen, wie z. B. eine Schwärzung, eine Zerstörung der Beugungsstruktur, ein Abtragen der Metallschicht usw.. Je nach ihrer Lage im Schichtaufbau sind die eingeschriebenen Muster auf der fertigen Hologrammkarte direkt sichtbar oder unter der Metallschicht 24 verborgen.

Die Laserbeschriftung beruht auf der Absorption der Laserstrahlung in dem zu beschriftenden Medium. Übliche Reflexionshologramme eignen sich, wie festgestellt werden konnte, in der Regel sehr gut für derartige Beschriftungen. In den Fällen, in denen die Laserbeschriftbarkeit nicht ausreicht, was insbesondere bei Transmissionshologrammen der Fall sein kann, ist eine Verbesserung der Beschriftungsqualität möglich, indem absorbierende Farben oder Zusätze in eine oder mehrere Schichten des Transferbandes eingefügt werden. Auf diese Weise können auch spezielle Schichten des Transferbandes in besonderer Weise sensibilisiert werden, so daß bei richtiger Dimensionierung der Laserenergie auch diese Schichten gezielter zu beeinflussen sind.

Bei hohen Laserleistungen kommt es wegen der geringen Dicke der Einzelschichten in der Regel zur völligen Materialverdampfung oder Plasmabildung über den gesamten Schichtaufbau. Auf diese Weise lassen sich Beschriftungen des Transferbandes erzielen, die, unabhängig von welcher Seite sie eingebracht werden, auf dem fertigen Produkt stets eindeutig erkennbar und nachträglich nicht mehr veränderbar sind. Dieser Aspekt ist insbesondere dann von besonderem Interesse, wenn die eingebrachten Daten in fälschungssicherer Form vorliegen sollen.

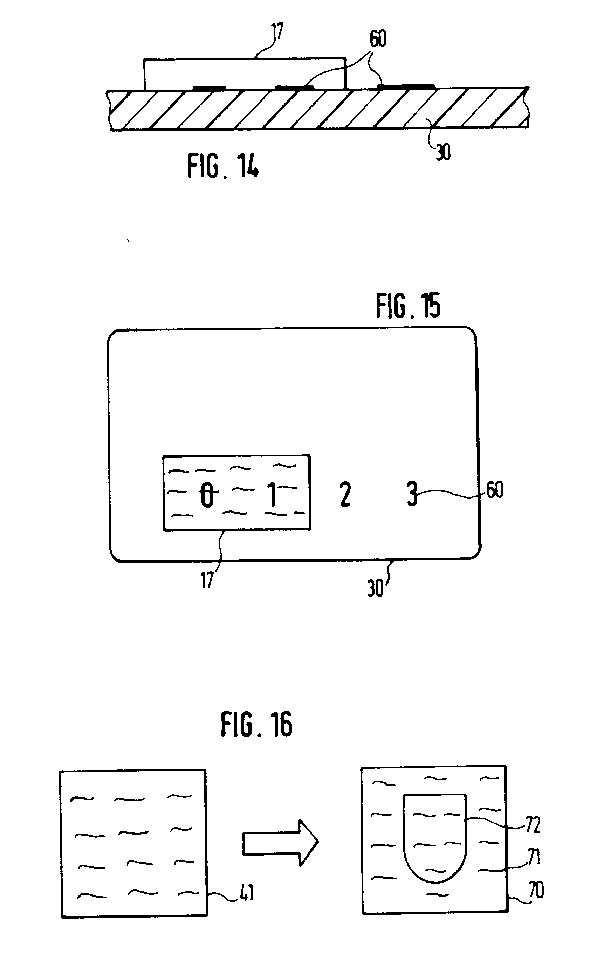

Alternativ zur Laserbeschriftung besteht auch die Möglichkeit einer mechanischen Perforierung des Transferbandes (Fig. 13). Hierzu wird die Folie im Bereich des Hologramms mit strukturierten Lochungen mit Hilfe eines Art Nadeldruckers oder mit einem Stanzbild versehen, das durch ein fest vorgegebenes Stanzwerkzeug erstellt wird. Für besonders komplizierte, gegebenenfalls auch von Hologramm zu Hologramm variierende Perforationen ist auch der Einsatz von Gravurmaschinen möglich, die den Materialabtrag mit Hilfe eines xy-gesteuerten Gravurstichels erzeugen.

Die für die Laserbeschriftung oder den mechanischen Materialabtrag verwendbaren Vorrichtungen sind dem Fachmann bekannt und müssen hier nicht näher erläutert werden.

### Individualisierungsmaßnahme E (beim Vorbereiten des Substrats)

Durch gezielte Maßnahmen am Substrat, die mit dem verwendeten Hologramm in Einklang stehen, sind weitere Effekte erzielbar. Hierzu werden im Hologrammbereich auf die Oberfläche des Substrats Kennzeichen aufgebracht, die später vom Hologramm ganz oder teilweise überdeckt werden und durch dieses hindurch erkennbar sind.

In den Fig. 14 bis 16 ist eine erste Variante dieser Maßnahmen im Schnitt und in Aufsicht dargestellt. Fig. 14 zeigt dementsprechend eine Karte 30, auf der ein Druckbild 60 vorgesehen ist, über dem ein Transferhologramm 17 angeordnet wurde. Das Druckbild 60 ist vom Hologramm 17 nur teilweise überdeckt, so daß die von dem Druckbild 60 repräsentierte Information somit auch nur teilweise zugänglich ist. Fig. 15 zeigt die in Fig. 14 im Schnitt dargestellte Karte in Aufsicht. Bei Verwendung eines transparenten Hologramms sind die unter dem Hologramm 17 angeordneten Daten unverändert gut erkennbar, da das Hologramm unter den Betrachtungswinkeln, unter denen der holografische Effekt nicht wirksam ist, in etwa einer Klarsichtfolie gleichgesetzt werden kann. Trotz der Erkennbarkeit werden die unter dem Hologramm 17 befindlichen Daten durch das darüber liegende Hologramm 17 vor Zugriff bzw. Manipulation geschützt. Auf diese Weise können wichtige Informationen einer Karte zwar visuell prüfbar, dem direkten Zugriff aber entzogen sein, wogegen weniger wichtige Daten frei zugänglich bleiben. Die unter dem Hologramm befindlichen Daten können somit im direkten Zusammenhang zu den außerhalb befindlichen stehen, sie können gleichen oder ähnlichen Informationsinhalt haben oder auch völlig unterschiedliche Sachverhalte betreffen. Durch Verwendung eines Reflexionshologramms ist darüber hinaus aber auch die visuelle Zugänglichkeit zu unterbinden, so daß die unter dem Hologramm 17 befindlichen Daten 60 somit nur noch maschinell überprüfbar sind.

Als Datenträger sind die verschiedensten Materialien verwendbar, so z. B. das Inlett eines mehrschichtigen Kartenaufbaus, ein Vollplastikkartenrohling oder auch ein Verpackungselement oder dergleichen. Besonders wirkungsvoll ist die Individualisierungsvariante, wenn das Druckbild so auf dem Substrat angeordnet ist, daß das darüber zu plazierende Hologramm, wie in Fig. 14 dargestellt, direkt über dem Druckbild zu liegen kommt. Auf diese Weise erhält man neben der gestalterischen Variationsmöglichkeit auch einen Schutz, der unter dem Hologramm befindlichen Daten, da diese Daten ohne Zerstörung des Hologramms nicht mehr verändert oder entfernt werden können. Besonders wirkungsvoll ist eine derartige Datenabsicherung beispielsweise bei Wertpapieren, bei der besonders wichtige Daten des Wertpapiers durch die Überlagerung mit einem Hologramm zum einen optisch hervorgehoben und zum anderen vor Zugriff geschützt werden können.

Das Druckbild 60 kann genau wie bei den vorherigen Ausführungsvarianten über eine größere Anzahl von Datenträgern unverändert ein Motiv, ein Firmenzeichen oder ähnliches darstellen oder aber eine von Datenträger zu Datenträger variierende Information, wie z. B. eine Zifferung oder eine fortlaufende Numerierung. Nach dem Bedrucken wird das Hologramm 17 auf dem Datenträger plaziert. Je nach Hologrammausführung variiert die Erkennbarkeit des Druckbildes. Transparente oder teiltransparente Hologramme lassen das Druckbild visuell erkennen. IR- oder UV-durchlässige Hologramme sind für verborgene, nur maschinell lesbare Beschriftungen vorzusehen. Möglichkeiten zur Gestaltung von teil- oder volltransparenten IR- und/oder UV-durchlässigen Hologrammen wurden bereits in der vorangehenden Beschreibung genannt und sind in diesem Sinne auch hier verwendbar.

In einer weiteren in Fig. 16 dargestellten Variante wird auf dem Datenträger 70 im Hologrammbereich als Druckbild 72 ein metallisch glänzender Untergrund aufgebracht, der im vorliegenden Fall ein Wappen darstellt, der im gleichen Sinne aber auch ein Firmenlogo, Schriftzeichen oder ähnliche Kennzeichen enthalten kann. Auf den so präparierten Datenträger wird ein Hologramm plaziert, das entweder gar keine Reflexionsschicht enthält oder mit einem teilreflektierenden Metallspiegel ausgestattet ist, durch den hindurch die glänzende Fläche erkennbar bleibt. Die Kennzeichnung ergänzt somit das Hologramm oder bleibt zumindest durch das aufgeklebte Hologramm hindurch visuell erkennbar, wobei bei Verwendung von transparenten Hologrammen das Druckbild 72 dominiert, bei Verwendung von halbdurchlässigen Hologrammen überwiegt vom optischen Eindruck her die holographische Information 71 des Standardhologramms 70.

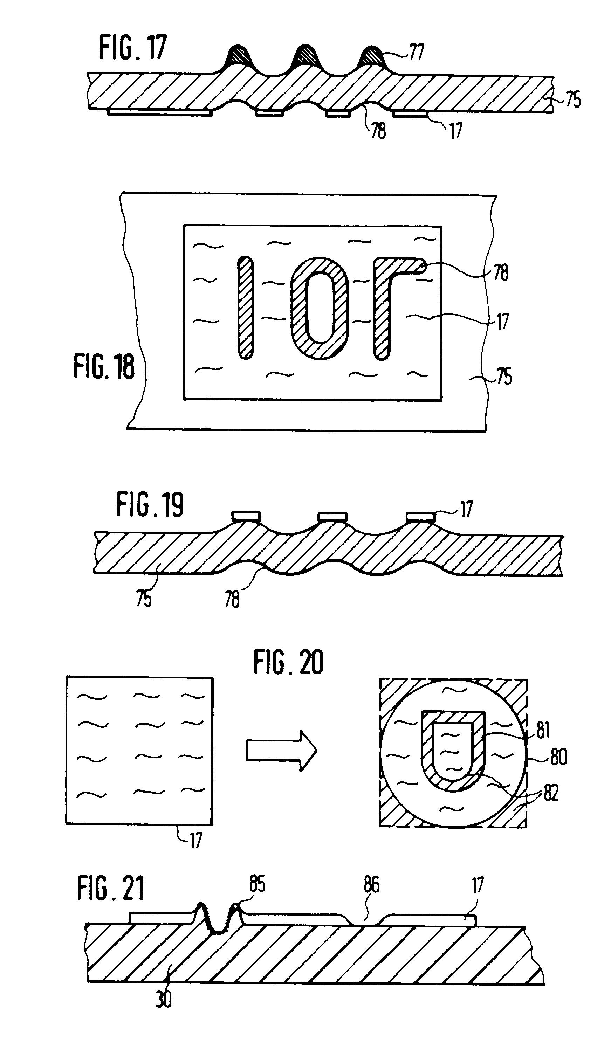

In einer weiteren Variante, die in den Fig. 17 und 18 wiedergegeben ist, wird das Standardhologramm 17 bei einem Wertpapier verwendet, bei dem es zusammen mit Stahltiefdruckinformationen eine Art Durchsichtsregister bildet. Das Wertpapier 75 ist dabei mit einem Stahltiefdruckbild 77 ausgestattet, das bekanntermaßen auf der Seite der Druckfarbe ein Positivrelief und auf der Rückseite deckungsgleich zum Farbauftrag ein Negativrelief 78 aufweist. Das Hologramm 17 ist auf der Rückseite des Wertpapiers im Bereich des Stahltiefdrucks aufgebracht, wobei das Negativrelief 78 beim großflächigen Transfer des Hologrammes, da dieses keine Eigenfestigkeit hat und somit im Bereich der Vertiefungen das Anhaften des Hologramms verhindert wurde, so daß in der Fläche des Hologramms 17 die Stahltiefdruckinformationen als Unterbrechung des Hologramms vorliegen. Im vorliegenden Fall ist durch Betrachtung der Vor- und Rückseite des Wertpapiers 75 ein Vergleich der Identität des Druckbilds 77 mit den Aussparungen 78 ebenso möglich wie im Durchlicht, da in diesem Fall das Druckbild 77 durch das Papier hindurch erkennbar ist und im unverfälschten Original fall deckungsgleich in den Hologrammaussparungen zu erkennen ist.

In einer Variante des in den Fig. 17 und 18 beschriebenen Verfahrens kann das Hologramm selbstverständlich auch, wie in Fig. 19 dargestellt, auf der Wertpapiervorderseite aufgebracht werden, wobei in diesem Fall nur die Scheitelpunkte des Stahldruckreliefs mit entsprechenden Ausschnitten des Hologramms 17 beschichtet werden. Besonders wirkungsvoll ist diese Maßnahme in Kombination mit einem sogenannten Blinddruck oder einer Blindprägung, da in diesem Fall der Farbauftrag 77 entfällt und somit allein das Hologramm die Reliefstrukturen überdeckt.

Besonders vorteilhaft sind die in den Fig. 17 bis 19 beschriebenen Varianten, da das Hologramm dabei auf besonders einfache Weise stets deckungsgleich zum Relief des Datenträgers übertragen wird und derartige Anwendungen (Stahltiefdruck oder Blindprägung) sich besonders gut in herkömmliche Wertpapiergestaltungen einfügen und auch besonders einfach in die klassischen Herstellverfahren integrieren lassen.

### Individualisierungsmaßnahme F (beim Transfer des Hologramms auf das Substrat)

In diesem Verfahrensschritt wird das Hologramm vom Transferband mittels eines beheizten Transferstempels auf das Substrat übertragen. Der Transfer erfolgt nur unterhalb der unmittelbaren Auflagefläche des Transferstempels. Nach Entfernen des Transferstempels reißt das Hologramm beim Abziehen des Transferbandes entlang der Kanten der Auflagefläche. Das auf dem Substrat anhaftende Hologramm weist somit exakte Umrisse des Transferstempels auf.

In diesem Verfahrensschritt läßt sich eine Individualisierung der Hologramme dadurch erreichen, daß man die Auflagefläche des Transferstempels in gezielter Weise in seiner Umrißkontur variiert. Dadurch erhält das Hologramm dieselbe individuelle Umrißkontur wie der Prägestempel. Auf diese Weise können die Hologramme in Form von speziellen Motiven, Firmenlogos, Schriftzeichen und dergleichen ausgebildet werden. Die Motive sind dabei sowohl im Positiv- oder im Negativdruck darzustellen. In Fig. 20 ist eine derartige Anwendung schematisch dargestellt, wobei das ursprüngliche Standardhologramm 17 durch den Prägestempel nur mit der äußeren Umrißform eines Kreises 80 tatsächlich transferiert wurde, wobei im Inneren dieser Kreisfläche ein Linienzug 81 in Form eines Wappens ausgespart ist. Die schraffiert dargestellten Flächenbereiche 82 des ursprünglichen Standardhologramms 17 bleiben beim Transfer unberücksichtigt.

Für den Fachmann ist verständlich, daß mit dieser Ausführungsvariante durch einmalige Herstellung des Heißprägestempels nahezu beliebig große Stückzahlen von individualisierten Hologrammen transferierbar sind. Die graphischen Strukturen können dabei auch wesentlich aufwendiger ausgebildet sein und können im Extremfall ganze Bereiche oder Teile des Druckbilds ersetzen oder ergänzen. Die Transferstempel können dabei so ausgebildet sein, daß sie nicht nur einfache Bildsymbole oder Schriftzeichen, sondern auch komplizierte Linienwerke oder Guillochstrukturen darstellen. Bei geschicktem Design kann eine derartige "Hologrammprägung" ähnlich vielseitig wie eine Druckfarbe eingesetzt werden. Durch eine derartige Anwendung wird das Hologramm weniger "aufdringlich" im Gesamtdruckbild integriert und ist auch in Fällen verwendbar, wo bisherige großflächige Hologrammdarstellungen rein aus ästetischen Gründen nicht verwendbar waren. Bei der Integration derartiger "Hologrammstrukturen" ist lediglich zu beachten, daß der holographische Effekt sowie die holographisch wiederzugebenden Details mit der Verringerung der Hologrammfläche ähnlich proportional abnehmen. Komplizierte holographische Informationen sind somit in nur in Linienbereichen vorliegenden Hologrammen weniger gut wiederzugeben.

In einer weiteren Variante dieser Individualisierungsmaßnahmen wird der Transferstempel durch ein Matrix-Heißprägegerät ersetzt. Diese auf dem Markt erhältlichen Geräte ermöglichen es, in der Transferphase permanent die Stempel form zu verändern, wodurch sich auch in diesem Verfahrensschritt von Hologramm zu Hologramm variierende Umrißstrukturen erzeugen lassen.

### Individualisierungsmaßnahme G (am Endprodukt)

In diesem Verfahrensschritt wird das auf das Substrat übertragene Hologramm durch punktuellen Abtrag, Veränderung oder Zerstörung in geeigneten Schichten modifiziert.

Eine erste Variante ist die Individualisierung durch Einschreiben von Informationen mittels eines Laserstrahlschreibers. Je nach Laserparameter und Folienaufbau lassen sich verschiedene Beschriftungseffekte erreichen, die auf den vielfältigen Wechselwirkungen des Laserstrahls und der Hologrammstruktur beruhen. Auf diese Weise sind sowohl dezente Material- und Farbveränderungen im Schichtaufbau des Hologramms ebenso möglich, wie die lokale Zerstörung oder die vollkommene Entfernung von Teilbereichen des Hologrammschichtaufbaues.

In Fig. 21 ist ein Kartenkörper 30 im Schnitt dargestellt im Zusammenhang mit zwei beispielhaften Beschriftungsvarianten. Das Hologramm 17 ist dabei unter hoher Energieeinwirkung des Laserstrahls nicht nur total zerstört, sondern das Kartensubstrat auch derart deformiert, daß in diesem punktuellen Bereich ein Mikrorelief 85 vorliegt. Üblicherweise wird bei derartigen Laserbeschriftungen das Kartensubstrat lokal verbrannt, wodurch eine schwarze Einfärbung des beschrifteten Bereiches vorliegt, die eine gute Lesbarkeit der derart erzeugten Schriftzeichen gewährleistet. Mit Hilfe des Mikroreliefs ist ein zusätzliches Echtheitskriterium geschaffen, mit dem Originallaserbeschriftungen von anderen Beschriftungsvarianten unterscheidbar sind.

Durch entsprechende Reduzierung der Laserenergie ist jedoch auch nur das lokale Entfernen der Hologrammschichten möglich, so daß im Extremfall die Daten durch Aussparungen 86 im Hologramm gebildet werden. Im Prinzip sind bei dieser Individualisierungsmaßnahme die gleichen technischen Möglichkeiten anwendbar, wie sie bei der Maßnahme D beschrieben sind. Im Unterschied zur Individualisierung am fertigen Transferband (Maßnahme D) werden die hier genannten Individualisierungen aber am fertigen Produkt angewandt, wodurch im Prinzip die Individualisierung eines beliebigen Hologramms möglich wird. Dies ist insbesondere dann besonders vorteilhaft, wenn für die Individualisierungsmaßnahmen das technische Verfahren Anwendung findet, mit dem auch die Personalisierungsdaten der Karte eingebracht werden. Gerade aus diesem Grunde empfiehlt sich in besonderem Maße die Verwendung eines Laserbeschriftungssystems. Im Grundsatz sind jedoch auch andere Verfahren anwendbar. Es ist lediglich darauf zu achten, daß die Individualisierungsmaßnahmen in irreversibler Form auf das Hologramm einwirken, so daß ein Rückgängigmachen der Maßnahmen auszuschließen ist.

### Kombination von Individualisierungsmaßnahmen

Mit den voran beschriebenen Individualisierungsmaßnahmen A bis G ist in den unterschiedlichsten Schritten der Prägematrizen-, Transferband- und Produktherstellung eine Hologrammindividualisierung möglich, wobei jede Maßnahme für sich einen sehr großen Spielraum für gestalterische Möglichkeiten bietet und ihre für die jeweilige Verfahrensstufe charakteristische Ausprägung hat. Ausgehend von einem Standardhologramm sind somit sehr unterschiedliche Wege aufgezeigt, Veränderungen vorzunehmen, mit denen trotz Vorliegen des gleichen Prägemasters sehr unterschiedliche Hologramme zu erzeugen sind, die am Endprodukt nicht nur eine individuelle Kennzeichnung, sondern auch den Schutz von auf dem Produkt befindlichen Daten ermöglichen.

Für den Fachmann ist einleuchtend, daß die Individualisierungsmaßnahmen A bis G nicht nur für sich getrennt einsetzbar sind, sondern daß durch beliebige Kombination der einzelnen Maßnahmen die Zahl der gestalterischen Möglichkeit zusätzlich zu erhöhen ist. Stellvertretend für die große Zahl der Möglichkeiten sind im folgenden einige Varianten genannt, wobei, soweit möglich, die Bezugsziffern der vorhergehenden Beispiele mit verwendet wurden.

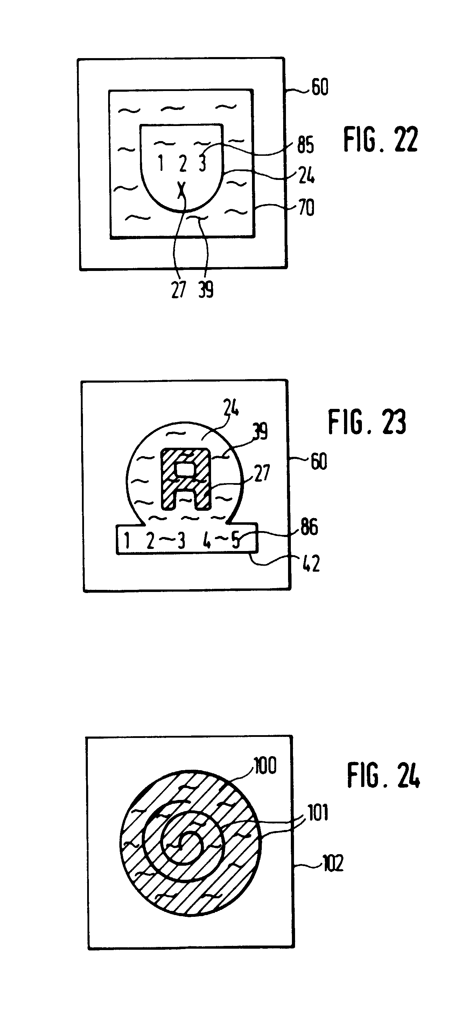

Fig. 22 zeigt somit ein individualisiertes Hologramm 17, bei dem die holographische Information 39 zwar über die gesamte Fläche des Rechtecks 70 vorliegt, bei dem die reflektierende Metallschicht 24 aber nur in Form eines Wappens vorliegt (Individualisierungsmaßnahme B). Im Bereich des Wappens ist ein Druckbild 27 vorgesehen (Maßnahme B) sowie mit einem Laserstrahl schreiber am fertigen Produkt eingeschriebene hologrammindividuelle Daten 85 (Maßnahme G). Die äußere Schutzschicht des Hologramms ist gelb eingefärbt (Maßnahme C), wodurch das Wappen für den Betrachter gelb erscheint. Das Hologramm ist auf einer blauen Druckfläche 60 aufgebracht, die auf dem Produkt aufgedruckt ist (Maßnahme E).

Die beschriebene Ausführungsform erscheint dem Betrachter nun im Bereich des Wappens als gelb getöntes Hologramm, das unter bestimmten Blickwinkeln die gewünschten holographischen Effekte deutlich erkennen läßt. Die das Wappen umgebenden Hologrammbereiche erscheinen grün (Mischfarbe aus blau und gelb), wobei auch in diesem Bereich die holographische Information, wenn auch weniger prägnant, erkennbar ist. Das grüngelb erscheinende rechteckige Hologrammfeld wird von einem blauen Rahmen begrenzt, der keine holographischen Effekte aufweist, die holographische Darstellung aber farblich ergänzt.

Fig. 23 zeigt eine weitere Ausführungsform, bei der ein individualisiertes Hologramm 42 Verwendung findet, das die Umrißform eines auf einem Rechteckbalken stehenden Kreises aufweist. Die Form des Hologramms 42 ist durch die Umrißform des Heißprägestempels geprägt (Maßnahme F). Im Bereich des Rechteckbalkens sind numerische Daten angeordnet, die mittels eines Laserstrahlschreibers erzeugt wurden und die als Aussparung der Hologrammfläche vorliegen (Maßnahme G). In der Kreisfläche des Hologramms ist ein Druckbild 27 in Form des Buchstabens "A" vorgesehen, das mit hellblauer Farbe während der Fertigstellung des Transferbandes eingebracht wurde (Maßnahme C). Die in der Umrißkontur vorliegende silberglänzende Metallschicht 24 ist als halbdurchlässiger Spiegel über dem Druckmuster 27 angeordnet. Der gesamte Schichtaufbau befindet sich auf einem gelben Hintergrunddruck 60, der auf dem Kartensubstrat vorgesehen ist (Maßnahme E).

Für den Betrachter erscheint dieses in seiner Umrißkontur strukturierte Hologramm als silberglänzende Fläche, durch die das blaue Druckbild 27 hindurch erkennbar ist. Unter vorgegebenem Betrachtungswinkelbereich erscheint in der Gesamtfläche 42 die holographisch gespeicherte Information, die auch dem Druckbild 27 überlagert ist. Lediglich die Ziffern 86 sind unabhängig vom Betrachtungswinkel zur Umgebung gut kontrastierend erkennbar. Die Gesamtanordnung wird durch die gelbe Hintergrundfläche eingerahmt.

Fig. 24 zeigt eine weitere Ausführungsform, bei der ein Wertpapier mit einem Durchsichtselement ausgestattet ist. Das Wertpapier ist mit einem Druckbild 101 versehen, das im Stahltiefdruck aufgebracht ist (Maßnahme E). Auf der Rückseite des Wertpapiers ist in der Kreiskontur des Druckbildes 101 ein Transmissionshologramm aufgebracht, bei dem die Konturen des Druckbilds 101 ausgespart sind (Maßnahme F). Das Hologramm selbst ist als Transmissionshologramm ausgeführt, bei dem keine Metallschicht vorgesehen ist und bei dem die beiden äußeren Schutzschichten (Schichten 22, 23) transparent rot eingefärbt sind (Maßnahme C).

Für den Betrachter ist das aus zwei Teilen bestehende Durchsichtselement von der Vorderseite als Stahldruckmotiv 101 und von der Rückseite als rot eingefärbtes Hologramm mit ausgesparter Negativkontur 101 erkennbar. Im Durchlicht ergänzen sich die beiden Elemente derart, daß das Druckbild 101 der Vorderseite sich lückenlos in die Aussparungen des Hologramms einfügen.

### Individualisierung von Volumen-Film-Hologrammen

Wie einleitend erwähnt, sind die erfindungsgemäßen Individualisierungsmaßnahmen bei Transfer-Prägehologrammen besonders gut einsetzbar und im Produktionsprozeß gut integrierbar. Die erfindungsgemäße Anwendung ist jedoch nicht auf diesen Hologrammtyp beschränkt. Im folgenden wird die Nutzung der erfindungsgemäßen Gedanken im Zusammenhang mit Volumen-Film-Hologrammen beschrieben.

Die wesentlichen Stufen der Serienherstellung von Volumenholorammen umfassen
- die Anfertigung eines Primärhologramms,
- die Vervielfältigung der Hologramme durch Kopieren,
- das Aufbringen der Hologramme auf ein Substrat.

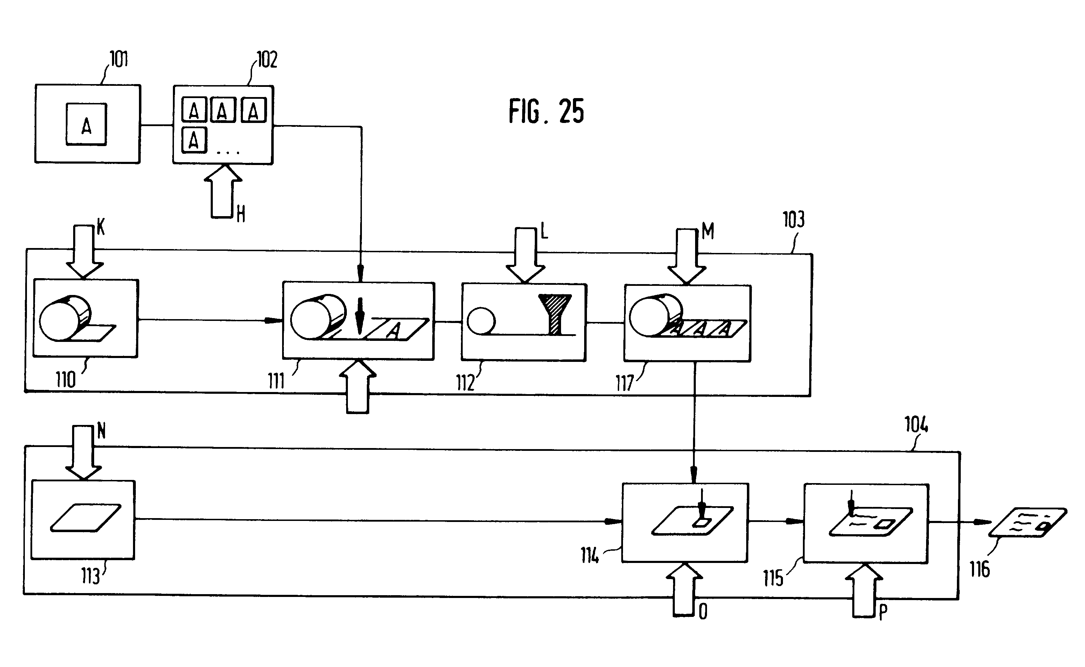

Anhand der Fig. 25 werden die Verfahrensschritte im folgenden näher erläutert, wobei aufbauend auf die in Fig. 2 und Fig. 5 genannten Details weitgehend nur auf die Abweichungen beider Verfahren eingegangen wird.

In der Verfahrensstufe 101 wird von einem Modell ein Hologramm auf einem fotosensitiven Material aufgezeichnet. Dies geschieht in üblicher Technik, indem ein Referenzstrahl mit einem Objektstrahl auf einer Fotoplatte überlagert wird. Nach dem Entwickeln und Fixieren stellt diese Fotoplatte das Primärhologramm dar.

Vom Primärhologramm, das dem Prägemaster entspricht, könnten nun beliebige Kopien gezogen werden, ohne daß der beim Prägehologramm notwendige Zwischenschritt Submaster notwendig wäre, da das Kopieren der Sekundärhologramme ein rein optischer Vorgang ist, der das Primärhologramm mechanisch nicht belastet.

Insbesondere wenn vom Primärhologramm zu unterschiedlichen Zeitpunkten größere Mengen von Kopien zu erstellen sind, ist es jedoch empfehlenswert, um Beschädigungen jeder Art, insbesondere durch Verkratzen etc., auszuschließen, vom Primärhologramm als Arbeitsexemplare Sekundärhologramme zu erstellen, die dann für den späteren Belichtungsvorgang des endgültigen Hologrammfilms im Verfahrensscshritt 111 verwendet werden.

Die Erstellung der Sekundärhologramme erfolgt nach gängiger Technik im Zwischenschritt 102 und ist in etwa vergleichbar mit der Herstellung der Submaster bzw. der Prägematrizen (Position 2, Fig. 5), nur daß dabei kein Fotoresistmaterial, sondern übliche Hologrammfilme Verwendung finden.

Im Zwischenschritt 110 werden die für das Volumenhologramm benötigten Filme erstellt. Holographiefilme bestehen, wie in der Fototechnik allgemein üblich, aus mindestens zwei Schichten, nämlich einem Trägermaterial, z. B. einem Polyesterfilm, und einer lichtempfindlichen Emulsion.

Ein derart vorgefertigter Film wird genau wie im Verfahrensschritt 102 auch im Verfahrensschritt 111 zur Erzeugung des auf dem Produkt zu verwendenden Hologramms belichtet. Dies geschieht in bekannter Weise, in dem der ursprüngliche holographische Aufbau, der bei der Belichtung des Primärhologramms genutzt wurde, zur Anwendung kommt, nur daß das Objekt nun gegen den Hologrammfilm ausgetauscht wird. Ein konjugierter (in Zeit und Richtung umgekehrter) Referenzstrahl wird dabei auf das Sekundärhologramm gerichtet. Dadurch wird an der ursprünglichen Position des Objekts ein reelles Bild erzeugt. Mit Hilfe eines zweiten Referenzstrahls wird das virtuelle Bild auf dem Hologrammfilm aufgezeichnet. Durch maschinelles Wiederholen des Kopiervorganges lassen sich somit beliebig viele Hologramme in Serienfertigung erstellen.

Nach dem Belichten wird der Film in Zwischenstufe 112 entwickelt und fixiert. Außerdem können zusätzliche Schichten, wie z. B. eine Schutzschicht, Klebeschicht etc., aufgebracht werden.

Die Zwischenstufe 117 ist für eventuelle Maßnahmen am fertigen Film vorgesehen. Sie steht in völliger Analogie zur Prägehologramm-Transferbandbearbeitung,

Die Vorbereitung des Substrats erfolgt in Verfahrensschritt 113. Auch diese Maßnahmen sind analog zum Prägehologramm zu sehen.

In Verfahrensschritt 114 wird das Hologramm auf dem Substrat aufgebracht. Je nach Substrat und Verwendungszweck sind für die Fixierung des Hologramms auf dem Substrat unterschiedliche Befestigungsmöglichkeiten gegeben. Gängige Techniken wären in diesem Zusammenhang das Aufkleben auf dem Substrat oder das Einkaschieren in den Schichtaufbau mehrlagiger Substrate, wie z. B. Ausweiskarten. In jedem Fall wird hierfür das Hologramm aus dem Film ausgestanzt und auf dem Substrat plaziert.

Die Bearbeitung des Endproduktes erfolgt in Verfahrensschritt 115. Die dort anfallenden Maßnahmen sind in Analogie zu den für Prägehologramme notwendigen Schritten zu sehen.

### Individualisierungsmaßnahmen bei Volumen-Film-Hologrammen

Die für die Individualisierung von Volumen-Hologrammen verwendbaren Individualisierungsmaßnahmen sind den im Zusammenhang mit Prägehologrammen beschriebenen ebenfalls sehr ähnlich.

Erste Möglichkeiten (Maßnahme H) ergeben sich somit im Verfahrensschritt 102, bei dem man der holographischen Kopie ein individuelles Aussehen verleiht, indem man in den Strahlengang an geeigneter Stelle Masken oder Abbildungssysteme einsetzt, so daß das holographische Bild entsprechend verändert oder nur in ausgewählten Flächenbereichen auf dem Hologrammfilm aufgezeichnet wird. Auf diese Weise kann erreicht werden, daß das holographische Bild eine besondere Umrißform, beispielsweise die eines Blockbuchstabens, erhält oder eine derartige Form aus dem holographischen Bild ausgespart wird. Da die Duplizierung der Hologramme im Verfahrensschritt 111 im wesentlichen den Maßnahmen des Verfahrensschrittes 102 gleichzusetzen sind, sind dementsprechend auch gleiche oder ähnliche Maßnahmen bei der Individualisierungsvariante I möglich.

Bei der Herstellung des holographischen Films (Zwischenschritt 110) sind analog der gängigen Fototechnik Individualisierungsmaßnahmen möglich, indem das Trägermaterial oder die Emulsionsschicht mit geeigneten Farbstoffen eingefärbt oder zusätzlich eingefärbte Schichten über oder unter dem Trägermaterial vorgesehen werden. Das ein- oder beidseitige Bedrucken des Filmmaterials ist in dieser Individualisierungsvariante K ebenfalls möglich. Da bei der Verwendung von Volumenhologrammen üblicherweise die Filmschicht zusammen mit dem Trägermaterial auf dem späteren Substrat (Produkt) aufgetragen werden, ist eine entsprechende Kennzeichnung des Trägerfilms in gleicher Weise denkbar. Als zusätzliche Individualisierungsmaßnahme kommt bei der Vorbereitung des holographischen Films auch eine Vorbelichtung des Films mit geeigneten Bildmotiven, wie z. B. einer Zifferung, einem Logo oder ähnlichen, hinzu.

Zu den Individualisierungsmaßnahmen L, M, N, O, P wird aufgrund der analogen Möglichkeiten auf die in Fig. 5 beschriebenen Maßnahmen verwiesen. Aufgrund des anderen holographischen Filmmaterials sind unter Umständen entsprechende Anpassungen notwendig. In Kenntnis des erfindungsgemäßen Grundgedankens sind diese Anpassungen dem Fachmann klar und deshalb nicht weiter zu erwähnen.

Ebenfalls für den Fachmann verständlich können die verschiedenen Individualisierungsmaßnahmen H bis P beliebig miteinander kombiniert werden, um komplexere Modifikationen zu erreichen.

### Anwendungsspektrum

Individualisierte Hologramme besitzen ein weites Anwendungsspektrum, das im folgenden danach unterschieden wird, wie die Hologramme auf dem späteren Endprodukt vorliegen. übliche Praxis ist es, Hologramme auf der Oberfläche von Datenträgern aufzubringen. Die Datenträger können dabei eine Papieroberfläche aufweisen, wie beispielsweise Banknoten, Ausweispapiere, Wertpapiere und dergleichen, aber auch eine Kunststoffoberfläche, wie Ausweiskarten, Kunststoff-Banknoten, Videokassetten usw.. In speziellen Ausführungsformen kann das Hologramm auf Teilbereiche des Produktes begrenzt, in anderem aber auch die gesamte Oberfläche des Produktes abdecken. Gerade im Bereich der Ausweiskarten und Kreditkarten sind diese unterschiedlichen Varianten inzwischen übliche Praxis. Holographische Elemente lassen sich aber auch in die Produkte einlagern. So ist es bekannt, Hologramm in mehrlagige Kunststoffkarten mit einzukaschieren. Das Hologramm kann dabei in vielfältigen Ausführungsformen vorliegen, wie beispielsweise als Sicherheitsfaden, in Form eines Logos, eines integrierten Bildmotivs oder dergleichen. Das Einbringen kann aber auch in einer Art Montagetechnik erfolgen, bei der in einer Folienlage einer mehrschichtigen Karte eine Öffnung zum Einkleben des Hologramms vorgesehen ist.

Darüber hinaus ist es ebenfalls möglich, holographische Elemente direkt in Papier einzubetten, wobei das holographische Material vorzugsweise in Form von Bändern, Streifen oder Planchetten geschnitten vorbereitet wird. Diese Elemente sind vorzugsweise bei der Herstellung des Papiers zuzufügen, wobei die Sicherungstechnik besonders wirkungsvoll ist, wenn sie beispielsweise in Form eines "Fenster-Sicherheitsfadens" im Papier vorliegt.

Aufgrund der hohen Zahl von Variationsmöglichkeiten erhält der Fachmann mit der Erfindung je nach technischer und/oder gestalterischer Notwendigkeit ausgehend von einem Standardhologramm die Möglichkeit, das Endprodukt exakt an die Bedürfnisse anzupassen. Obwohl als Ausgangsbasis gleiche holographische Aufzeichnungen verwendet werden, sind durch die Erfindung Möglichkeiten gegeben, den Endprodukten völlig unterschiedliche Ausstattungen zu verleihen. Neben der großen Zahl von optischen Variationsmöglichkeiten können mit der erfinderischen Lehre auch die finanziellen Vorgaben entsprechend Berücksichtigung finden, wodurch eine Produktanpassung an nahezu sämtliche Anforderungen möglich ist.

## Patentansprüche

1. Verfahren zur Herstellung einer Serie von Datenträgern, insbesondere Ausweiskarten, Wertpapiere oder dergleichen, wobei jeder der Datenträger mit einem mehrschichtigen, optisch variablen Element, insbesondere Hologramm, versehen ist, welches Beugungsstrukturen aufweist, wobei die Beugungsstrukturen eine visuell erkennbare Information darstellen, dadurch **gekennzeichnet**, daß das Verfahren aus mehreren Einzelschritten besteht und daß es wenigstens einen vorbestimmten Verfahrensschritt zur Erzeugung einer irreversiblen Veränderung im Bereich des optisch variablen Elements aufweist, wodurch das Erscheinungsbild der durch die Beugungsstrukturen dargestellten Information irreversibel verändert wird, um damit eine Individualisierung eines einzelnen Datenträgers der Serie oder einer Untermenge der Serie zu bewirken.

2. Verfahren nach Anspruch 1 **dadurch gekennzeichnet**, daß das Verfahren wenigstens einen der folgenden Verfahrensschritte zur Veränderung des optisch variablen Elements aufweist:
- Vorsehen eines Lumineszenzstoffes,
- Erzeugen eines maschinell lesbaren Druckbildes,
- lokale Verfärbung einer der Schichten des Elements,
- lokale Zerstörung zumindest der Beugungsstruktur,
- Modifizierung der flächigen Ausdehnung des Elements.

3. Verfahren nach Anspruch 1 oder 2, dadurch gekennzeichnet, daß das optisch variable Element reflektierend ist.

4. Verfahren nach wenigstens einem der Ansprüche 1-3, dadurch **gekennzeichnet**, daß das optisch variable Element als Transfer-Prägehologramm hergestellt wird und die Veränderung während der Herstellung des Transferbandes und/oder des Transfers auf den Datenträger Vorgenommen wird.

5. Verfahren nach Anspruch 4, dadurch **gekennzeichnet**, daß die Veränderung während der Fertigstellung des Transferbandes erfolgt, indem die Klebstoffschicht in Form von alphanumerischen Zeichen, Mustern oder Maschinencodes aufgebracht wird, so das beim Transfer auf den Datenträger lediglich die mit Klebstoff versehenen Bereiche übertragen werden.

6. Verfahren nach Anspruch 4, dadurch **gekennzeichnet**, das der Transfer des Elements auf den Datenträger mittels eines Transferstempels erfolgt und die Veränderung während des Transfers stattfindet, indem die Auflagefläche des Transferstempels modifiziert wird.

7. Verfahren nach wenigstens einem der Ansprüche 1 bis 6, dadurch **gekennzeichnet**, daß der Datenträger im Stahltiefdruckverfahren bedruckt wird und nur die Scheitelbereiche des Druckbildes mit den Beugungsstrukturen versehen werden.

8. Verfahren nach wenigstens einem der Ansprüche 1 bis 7, dadurch **gekennzeichnet**, daß der Datenträger im Stahltiefdruckverfahren bedruckt wird und die Beugungsstrukturen auf der dem Druckbild gegenüberliegenden Seite des Datenträgers derart aufgebracht werden, daß sich bei Betrachtung des Datenträgers im Durchlicht das Druckbild und die Beugungsstrukturen zu einem ästhetischen Gesamteindruck ergänzen.

9. Verfahren nach wenigstens einem der Ansprüche 1 bis 8, dadurch **gekennzeichnet**, daß der Datenträger nach dem Aufbringen des optisch variablen Elements im Bereich der Beugungsstruktur derart mit einem Laser bearbeitet wird, daß in wenigstens einer der Schichten des Elements und/oder einer der direkt angrenzenden Schichten des Datenträgers lokal eine Verfärbung erfolgt.

10. Verfahren nach wenigstens einem der Ansprüche 1 bis 9, dadurch **gekennzeichnet**, daß die Schichtstruktur des Elements mit einem Laser lokal abgetragen wird und kongruent zu diesem Schichtabtrag wenigstens eine der direkt angrenzenden Schichten des Datenträgers deformiert wird, so daß ein fühlbares Mikrorelief entsteht.

11. Verfahren nach wenigstens einem der Ansprüche 1 bis 10, dadurch **gekennzeichnet**, daß mindestens eine Schicht des Elements und/oder eine der direkt angrenzenden Schichten des Datenträgers perforiert, gestanzt, graviert oder gelocht wird.

12. Verfahren zur Herstellung eines Transferbandes für den Übertrag mehrschichtiger, optisch variabler Elemente auf Datenträger einer Serie, wobei das Element Beugungsstrukturen aufweist, die eine visuell erkennbare Information darstellen, deren Erscheinungsbild sich mit Änderung des Betrachtungswinkels visuell erkennbar ändert, dadurch **gekennzeichnet**, daß das Verfahren aus mehreren Einzelschritten besteht und daß es wenigstens einen vorbestimmten Verfahrens schritt zur Erzeugung einer irreversiblen Veränderung im Bereich des optisch variablen Elemente aufweist, wodurch das Erscheinungsbild der durch die Beugungsstrukturen dargestellten Information irreversibel verändert wird, um damit eine Individualisierung eines einzelnen Elements oder einer Gruppe von Elementen zu bewirken.

13. Verfahren nach Anspruch 12, dadurch **gekennzeichnet**, daß das Verfahren wenigstens einen der folgenden Verfahrensschritte zur Veränderung des optisch variablen Elements aufweist:
- Vorsehen eines Lumineszenzstoffes,
- Erzeugen eines maschinell lesbaren Druckbildes,
- lokale Verfärbung einer der Schichten des Elements,
- lokale Zerstörung zumindest der Beugungsstruktur,
- Modifizierung der flächigen Ausdehnung des Elements.

14. Verfahren nach Anspruch 12 oder 13, dadurch **gekennzeichnet**, daß die Beugungsstrukturen mit Hilfe von Prägematrizen, die von einem Master abgeformt werden, in die Prägeschicht übertragen werden und die Veränderung während der Herstellung der Prägematrizen erfolgt, indem während des Abformens des Masters nur ausgewählte Flächenbereiche des Masters übertragen werden.

15. Verfahren nach Anspruch 14, dadurch **gekennzeichnet**, daß die zu übertragenden Flächenbereiche des Masters mittel Photolithographie festgelegt werden.

16. Verfahren nach Anspruch 12 oder 13, dadurch **gekennzeichnet**, daß die Beugungsstrukturen mit Hilfe von Prägematrizen in die Prägeschicht übertragen werden und die Veränderung an den Prägematrizen erfolgt, indem die Beugungsstrukturen in bestimmten Bereichen durch chemische oder feinmechanische Prozesse abgetragen oder verändert werden.

17. Verfahren nach Anspruch 13, dadurch **gekennzeichnet**, daß die Verfärbung wenigstens einer der Schichten des Elements (17) oder die Zerstörung zumindest der Beugungsstruktur mit einem Laser erzeugt wird.

18. Verfahren nach wenigstens einem der Ansprüche 12 bis 17, dadurch **gekennzeichnet**, daß die gesamte Schichtstruktur des Elements (17) lokal abgetragen wird.

19. Verfahren nach wenigstens einem der Ansprüche 12 bis 18, dadurch **gekennzeichnet**, daß die Veränderung in Form einer fortlaufenden Numerierung oder eines Maschinencodes, insbesondere eines Balkencodes, vorgenommen wird.

20. Verfahren nach wenigstens einem der Ansprüche 12 bis 19, dadurch **gekennzeichnet**, daß das Transferband mit einer Klebstoffschicht versehen wird, die für die Modifizierung der flächigen Ausdehnung als Muster aufgetragen wird.

21. Verfahren zur Herstellung einer Serie von mehrschichtigen, optisch variablen Elementen zur Aufbringung auf Datenträger, wobei das Element Beugungsstrukturen aufweist, die eine visuell erkennbare Information darstellen, deren Erscheinungsbild sich mit Änderung des Betrachtungswinkels visuell erkennbar ändert, dadurch **gekennzeichnet**, daß das Verfahren aus mehreren Einzelschritten besteht und daß es wenigstens einen vorbestimmten Verfahrenschritt zur Erzeugung einer irreversiblen Veränderung in Bereich des optisch variablen Elements aufweist, wodurch das Erscheinungsbild der durch die Beugungsstrukturen dargestellten Information irreversibel verändert wird, um damit eine Individualisierung eines einzelnen Elements oder einer Gruppe von Elementen zu bewirken.

22. Verfahren nach Anspruch 21, dadurch **gekennzeichnet**, daß das Verfahren wenigstens einen der folgenden Verfahrenschritte zur Veränderung des optisch variablen Elements aufweist:
- Vorsehen eines Lumineszenzstoffes,
- Erzeugen eines maschinell lesbaren Druckbildes,
- lokale Verfärbung einer der Schichten des Elements,
- lokale Zerstörung zumindest der Beugungsstruktur,
- Modifizierung der flächigen Ausdehnung des Elements.

## Claims

1. A method for producing a series of data carriers, in particular ID cards, papers of value or the like, each of the data carriers being provided with a multilayer, optically variable element, in particular hologram, which has diffraction structures, the diffraction structures representing visually recognizable information, characterized in that the method consists of a plurality of single steps, and it has at least one predetermined method step for producing an irreversible change in the area of the optically variable element, thereby irreversibly changing the appearance of the information represented by the diffraction structures in order to effect an individualization of one data carrier of the series or a subset of the series.

2. The method of claim 1, characterized in that the method has at least one of the following method steps for changing the optically variable element:
providing a luminescent substance,
producing a machine readable printed image,
locally discoloring one of the layers of the element,
locally destroying at least the diffraction structure,
modifying the superficial extent of the element.

3. The method of claim 1 or 2, characterized in that the optically variable element is reflective.

4. The method of at least one of claims 1 to 3, characterized in that the optically variable element is produced as a transfer embossed hologram and the change is performed during production of the transfer band and/or transfer to the data carrier.

5. The method of claim 4, characterized in that the change is effected during completion of the transfer band by applying the adhesive layer in the form of alphanumeric characters, patterns or machine codes so that only the areas provided with adhesive are transferred during transfer to the data carrier.

6. The method of claim 4, characterized in that the transfer of the element to the data carrier is effected by means of a transfer die and the change is effected during transfer by modifying the contact surface of the transfer die.

7. The method of at least one of claims 1 to 6, characterized in that the data carrier is printed by steel intaglio printing and only the apex areas of the printed image are provided with the diffraction structures.

8. The method of at least one of claims 1 to 7, characterized in that the data carrier is printed by steel intaglio printing and the diffraction structures are applied on the side of the data carrier opposite the printed image such that the printed image and the diffraction structures complement each other to form an esthetic general impression when the data carrier is viewed by transmitted light.

9. The method of at least one of claims 1 to 8, characterized in that after application of the optically variable element the data carrier is processed with a laser in the area of the diffraction structure such that a discoloration takes place locally in at least one of the layers of the element and/or one of the directly adjacent layers of the data carrier.

10. The method of at least one of claims 1 to 9, characterized in that the layer structure of the element is removed locally with a laser and at least one of the directly adjacent layers of the data carrier is deformed congruently to this layer removal so that a tangible microrelief arises.

11. The method of at least one of claims 1 to 10, characterized in that at least one layer of the element and/or one of the directly adjacent layers of the data carrier is perforated, punched, engraved or pierced.

12. A method for producing a transfer band for transferring multilayer, optically variable elements to data carriers of a series, the element having diffraction structures which represent visually recognizable information whose appearance changes in visually recognizable fashion upon a change of the viewing angle, characterized in that the method consists of a plurality of single steps, and it has at least one predetermined method step for producing an irreversible change in the area of the optically variable element, thereby irreversibly changing the appearance of the information represented by the diffraction structures in order to effect an individualization of one element or a group of elements.

13. The method of claim 12, characterized in that the method has at least one of the following method steps for changing the optically variable element:
providing a luminescent substance,
producing a machine readable printed image,
locally discoloring one of the layers of the element,
locally destroying at least the diffraction structure,
modifying the superficial extent of the element.

14. The method of claim 12 or 13, characterized in that the diffraction structures are transferred into the embossed layer with the aid of embossing dies molded from a master, and the change is effected during production of the embossing dies by transferring only selected areas of the master during molding from the master.

15. The method of claim 14, characterized in that the areas of the master to be transferred are fixed by means of photolithography.

16. The method of claim 12 or 13, characterized in that the diffraction structures are transferred into the embossed layer with the aid of embossing dies and the change is effected on the embossing dies by removing or changing the diffraction structures in certain areas by chemical or fine mechanical processes.

17. The method of claim 13, characterized in that the discoloration of at least one of the layers of the element (17) or the destruction of at least the diffraction structure is produced with a laser.

18. The method of at least one of claims 12 to 17, characterized in that the total layer structure of the element (17) is removed locally.

19. The method of at least one of claims 12 to 18, characterized in that the change is performed in the form of a consecutive numbering or a machine code, in particular a bar code.

20. The method of at least one of claims 12 to 19, characterized in that the transfer band is provided with an adhesive layer which is applied as a pattern for modifying the superficial extent.

21. A method for producing a series of multilayer, optically variable elements for application to data carriers, the element having diffraction structures which represent visually recognizable information whose appearance changes in visually recognizable fashion upon a change of the viewing angle, characterized in that the method consists of a plurality of single steps, and it has at least one predetermined method step for producing an irreversible change in the area of the optically variable element, thereby irreversibly changing the appearance of the information represented by the diffraction structures in order to effect an individualization of one element or a group of elements.

22. The method of claim 21, characterized in that the method has at least one of the following method steps for changing the optically variable element:
providing a luminescent substance,
producing a machine readable printed image,
locally discoloring one of the layers of the element,
locally destroying at least the diffraction structure,
modifying the superficial extent of the element.

## Revendications

1. Procédé de fabrication d'une série de supports de données, en particulier des cartes d'identification, des papiers valeurs ou similaires, dans lequel chacun des supports de données est muni d'un élément optiquement variable multi-couches, en particulier un hologramme présentant des structures de diffraction, dans lequel les structures de diffraction représentent une information susceptible d'être reconnue visuellement, caractérisé en ce que le procédé est composé de plusieurs étapes individuelles et en ce qu'il comporte au moins une étape de procédé prédéterminée destinée à effectuer un changement irréversible dans la zone de l'élément optiquement variable, de sorte que l'image visuelle de l'information, représentée par les structures de diffraction, soit modifiée de façon irréversible, afin de réaliser ainsi une individualisation d'un support de données individuel de la série, ou d'un sous-ensemble de la série.

2. Procédé selon la revendication 1, caractérisé en ce que le procédé présente au moins une des étapes de procédé suivantes pour modifier l'élément optiquement variable :
- l'étape consistant à prévoir une matière luminescente ;
- la production d'une image imprimée susceptible d'être lue par une machine ;
- la destruction locale d'au moins l'une des structures de diffraction ;
- la modification de l'extension superficielle de l'élément.

3. Procédé selon la revendication 1 ou 2, caractérisé en ce que l'élément optiquement variable est réfléchissant.

4. Procédé selon au moins une des revendications 1 à 3, caractérisé en ce que l'élément optiquement variable est réalisé sous la forme d'un hologramme matricé par transfert et le changement est effectué pendant la fabrication de la bande de transfert et/ou pendant le transfert sur le support de données.

5. Procédé selon la revendication 4, caractérisé en ce que le changement est réalisé pendant la production de la bande de transfert en appliquant la couche d'adhésif sous forme de caractères, de modèles ou de codes machine alphanumériques, de sorte que, lors du transfert sur le support de données, uniquement les zones munies d'adhésif soient transférées.

6. Procédé selon la revendication 4, caractérisé en ce que le transfert de l'élément sur le support de données est effectué au moyen d'un poinçon de transfert et le changement est effectué pendant le transfert, de sorte que la surface d'appui du poinçon de transfert soit modifiée.

7. Procédé selon au moins l'une des revendications 1 à 6, caractérisé en ce que le support de données est imprimé selon le procédé en taille douce et uniquement les zones de crête de l'image imprimée sont munies des structures de diffraction.

8. Procédé selon au moins l'une des revendications 1 à 7, caractérisé en ce que le support de données est imprimé au moyen du procédé en taille douce et en ce que les structures de diffraction sont appliquées sur la face du support de données opposée à l'image imprimée de sorte que, lorsqu'on observe le support de données par transparence, l'image imprimée et les structures de diffraction se complètent pour réaliser une impression globale esthétique.

9. Procédé selon au moins l'une des revendications 1 ou 8, caractérisé en ce que le support de données, après l'application de l'élément optiquement variable, est traité au moyen d'un laser dans la zone de la structure de diffraction de sorte que, dans au moins l'une des couches de l'élément et/ou une couche qui y est directement contiguë du support de données, il apparaisse un changement de couleur local.

10. Procédé selon au moins l'une des revendications 1 à 7, caractérisé en ce que la structure de couche de l'élément est éliminée localement au moyen d'un laser et en congruence avec cette élimination de couche, au moins l'une des couches directement contiguë du support de données est déformée de telle sorte qu'il apparaisse un micro-relief sensible.

11. Procédé selon au moins l'une des revendications 1 à 10, caractérisé en ce que au moins une couche de l'élément et/ou l'une des couches directement contigue du support de données, est perforée, poinçonnée, gravée ou percée.

12. Procédé pour la fabrication d'une bande de transfert pour le transfert d'un élément optiquement variable multi-couche sur un support de données d'une série, l'élément présentant des structures de diffraction qui représentent une information susceptible d'être reconnue visuellement, et dont l'image qu'elles représentent est modifiée d'une façon susceptible d'être reconnue visuellement en modifiant l'angle d'observation, caractérisé en ce que le procédé est composé de plusieurs étapes individuelles et en ce qu'il comporte au moins une étape de procédé destinée à provoquer un changement irréversible dans la zone de l'élément optiquement variable, de sorte que l'image visuelle de l'information, représentée par les structures de diffraction, soit modifiée de façon irréversible, et permette ainsi de réaliser une individualisation d'un élément individuel ou d'un groupe d'éléments.

13. Procédé selon la revendication 12, caractérisé en ce que le procédé présente au moins une des étapes de procédé suivantes pour modifier l'élément optiquement variable :
- l'étape consistant à prévoir une matière luminescente ;
- la création d'une image imprimée susceptible d'être lue par une machine ;
- la destruction locale d'au moins la structure de diffraction ;
- la modification de l'extension superficielle de l'élément.

14. Procédé selon l'une des revendications 12 ou 13, caractérisé en ce que les structures de diffraction sont réalisées à l'aide de matrices d'estampage formées à partir d'un élément maître, qui sont transférées dans la couche de gaufrage et en ce que la modification est réalisée lors de la fabrication des matrices d'estampage de telle sorte que, pendant la a réalisation à partir de l'élément maître, uniquement des zones de surface choisies de l'élément maître soient transférées.

15. Procédé selon la revendication 14, caractérisé en ce que les zones de surface de l'élément maître à transférer sont établies par photolithographie.

16. Procédé selon la revendication 12 ou 13, caractérisé en ce que les structures de diffraction sont transférées à l'aide de matrices d'estampage dans la couche de gaufrage et la modification est réalisée au niveau des matrices d'estampage de telle sorte que les structures de diffraction soient éliminées ou modifiées dans certaines zones par des procédés chimiques ou de mécanique de précision.

17. Procédé selon la revendication 13, caractérisé en ce que le changement de couleur d'au moins l'une des couches de l'élément (17) est effectué avec un laser ou la destruction d'au moins la structure de diffraction.

18. Procédé selon au moins l'une des revendications 12 à 17, caractérisé en ce que la totalité de la structure de couche de l'élément (17) est enlevée localement.

19. Procédé selon au moins l'une des revendications 12 à 18, caractérisé en ce que le changement est réalisé sous la forme d'une numérisation continue ou d'un code machine, en particulier d'un code-barres.

20. Procédé selon au moins l'une des revendications 12 à 19, caractérisé en ce que la bande de transfert est munie d'une couche adhésive qui est appliquée comme modèle, pour la modification de l'extension surfacique.

21. Procédé pour la fabrication d'une série d'éléments multicouches optiquement variables à appliquer sur un support de données, l'élément présentant des structures de diffraction qui représentent une information susceptible d'être reconnue visuellement, et dont l'image qu'elles représentent se modifie d'une façon susceptible d'être reconnue visuellement avec un changement de l'angle d'observation, caractérisé en ce que le procédé est composé de plusieurs étapes individuelles et en qu'il comporte au moins une étape de procédé prédéterminée pour provoquer une modification irréversible dans la zone de l'élément optiquement variable, de sorte que l'image visuelle de l'information, représentée par les structures de diffraction, soit modifiée de façon irréversible, et permette ainsi de réaliser une individualisation d'un élément individuel ou d'un groupe d'éléments.

22. Procédé selon la revendication 21, caractérisé en ce que le procédé présente au moins l'une des étapes de procédé suivantes pour modifier l'élément optiquement variable :
- l'étape consistant à prévoir une matière luminescente ;
- la création d'une image imprimée susceptible d'être lue par une machine ;
- la destruction locale d'au moins la structure de diffraction ;
- la modification de l'extension superficielle de l'élément.
